# EUROPEAN PATENT SPECIFICATION

(11) **EP 3 096 847 B1**
(45) Date of publication and mention of the grant of the patent: **29.05.2024**
(21) Application number: 14701208.2
(22) Date of filing: 24.01.2014
(51) Int. Cl.: A63C 17/04, A63C 17/14

(54) **SYSTEM FOR REGULATED AND/OR LIMITED SPEED CONTROL**
SYSTEM FÜR GEREGELTE UND/ODER BEGRENZTE GESCHWINDIGKEITSSTEUERUNG
SYSTÈME POUR UNE COMMANDE DE VITESSE RÉGULÉE ET/OU LIMITÉE

(43) Date of publication of application: 30.11.2016
(73) Proprietor: SmartGroup AS, 1366 Lysaker (NO)
(72) Inventor: STUBBERUD, Atle, N-1555 Son (NO)
(74) Representative: Meissner Bolte Partnerschaft mbB
(86) International application number: PCT/EP2014/051379
(87) International publication number: WO 2015/110167

(56) References cited:
- WO-A1-02/066123
- DE-U1-202005 012 239
- DE-U1-202006 010 647
- US-A- 5 868 404
- US-A- 5 868 404
- US-A1- 2003 214 103

## Description

### Field of the Invention

The invention relates to the field of wheeled articles and, more specifically, the control of a speed of wheeled articles.

### Background of the Invention

Articles designed for travel, in particular those comprising wheels, generally require means for controlling the speed that the wheeled article is travelling at. Such can include those that are powered by human interaction or via gravitational influences, such as rollerblades or in-line skates, bicycles, skateboards, baby trolleys, wheelchairs, or the like.

In recent times, the popularity of roller skiing, in particular cross-country roller skiing, has increased primarily due to the fact that such can be performed as a training exercise during times of the year when accessibility to snow is difficult. In addition, roller skiing is also popular as a stand-alone sport, and is attracting interest from people of different abilities and experiences.

A typical roller ski includes a longitudinal body comprising at least one wheel at each end thereof. A user attaches one ski to each foot and uses associated ski poles to move with the roller skis. Primarily, two types of roller skis are currently available. Roller skis designed to be used with the classic ski technique include wheels that rotate freely in the forward direction and at least one wheel that is blocked from reverse rotation. In contrast, roller skis designed to be used with the skating technique include wheels that move freely in both the forward and reverse directions.

One difficultly that is associated with these systems, however, is speed regulation and/or braking of the roller ski. Many existing systems utilise primitive brake mechanisms that require the user to bend their leg in order to operate such a mechanism. This can be quite cumbersome for a user to operate, particularly for a beginner who has relatively little experience operating roller skis, during instances of emergency, or during cornering or skiing on inclined surfaces, for example. Moreover, many of these existing brake mechanisms act on the outside of a wheel, and are thus prone to variable effectiveness due to the presence of dirt, gravel, water, etc., that can accumulate on the wheels or brake mechanism.

As a result, currently available roller skis are considered to provide huge safety risks, especially for untrained or inexperienced users. For example, a skier may lose control when travelling too fast downhill, which could be dangerous not only for the skier but also for other users of road networks, i.e., pedestrians, cyclists, etc. For these reasons, restrictions on the use of roller skis on public roads exist and, combined with the safety issues, many skiers are reluctant to use roller skis.

Several attempts to improve the braking systems of wheeled articles or roller skis have been proposed. U.S. patent 5,901,981 A discloses a ski simulation apparatus provided with brake means adapted to contact one of the wheels thereof, and an associated brake lever to operate the brake means. The brake lever is positioned on a ski pole and includes a brake cable connecting the brake lever to the brake means. Accordingly, a user may operate the brake lever to apply a braking force to the wheel of the ski simulation apparatus.

As described in U.S. patent 5,868,404 A, which is related to in-line skates, a wired connection between a brake lever and brake means can be obstructive to a user, however. For example, during use, the cable may become tangled or may rub on the skier themselves, thus causing irritation to the skier or even damage to the cable. In U.S. patent 5,868,404 A a wireless activation of a heel pad or braking wheel is provided, wherein a wrist activated device is in RF communication with a receiver/transmitter located on the in-line skate. Activation of the wrist activated device causes the heel pad or braking wheel to engage.

In both of the documents described above, a user is permitted to have full control of the braking mechanism. Therefore, a user may apply a full braking force or a partial braking force to the roller ski in any situation or under any conditions. For instance, a beginner could be travelling at a reasonable speed for the skis themselves, but too quickly for the beginner's actually ability, and subsequently the beginner may apply a full braking force to the roller ski. In this situation, a full braking force is not required to slow the beginner, and correspondingly the roller ski comes to an abrupt halt. In many cases, this situation is as dangerous as the issues associated with primitive brakes described above, given that a user may rapidly lose balance or control during an abrupt or unintended stop. Further examples of speed control for wheeled articles are shown in the documents US 2003/214103 A1 and DE 20 2005 012239 U1.

Accordingly, it is an object of the present invention to provide a speed control system that is able to regulate and/or limit the speed of a wheeled article, and more particularly, a roller ski, enabling a user to safely but effectively control the speed of the wheeled article or roller ski.

### Summary of the Invention

This object is achieved by the system of claim 1. With regards to the method, this object is achieved by the subject-matter of claim 45. With regards to the use, this object is achieved by the subject-matter of claim 69.

The invention provides a speed control system for a wheeled article which is adapted to regulate and/or limit the speed of the wheeled article. The wheeled article comprises a body and one or more wheels mounted to the body. The speed control system comprises one or more brake units provided so as to engage one or more of the one or more wheels and apply a braking force thereto, a user actuator disposed so as to be operable by a user, and a control unit adapted to receive a signal indicative of the actuation of the user actuator when operated by the user and actuate the one or more brake units to engage the one or more wheels. The speed control system further comprises restriction means that is adapted to limit the magnitude of the braking force applied to the one or more wheels from the one or more brake units.

This arrangement allows for a user of the wheeled article to actuate the user actuator, thereby controlling and actuating the one or more brake units, but in a safe and controlled manner due to the presence of the restriction means. In other words, the restriction means prevents the user from applying a braking force that is too strong in magnitude for the current operating condition of the wheeled article or the ability of the user. As such, abrupt speed control can be avoided and the wheeled article becomes safer to user.

According to the present invention, the restriction means is adapted to limit the magnitude of the braking force to less than 100 percent of the maximum braking force attainable by the one or more braking units. A user is not able to apply the full braking force attainable by the one or more braking units.

According to the present invention, the user actuator has actuation means that is compressed by the user's hand, and wherein the restriction means is adapted to convert the actuation of the actuation means over its full range of motion to a partial range of actuation of the one or more brake units.

The actuation of the actuation means is mapped to a reduced actuation of the one or more brake units. That is, the actuation of the actuation means is not provided on a 1:1 scale with the actuation of the one or more brake units, but is a reduced scale. For example, the partial range of actuation of the one or more brake units may be from any of 0 to 90 percent, 0 to 80 percent, 0 to 70 percent, 0 to 60 percent, 0 to 50 percent, 0 to 40 percent, 0 to 30 percent, 0 to 20 percent or 0 to 10 percent of the full range of the actuation of the one or more brake units.

The user is permitted full control of the actuation means of the user actuator, but is prevented from applying an unnecessary braking force or a braking force that is too great for the current operating situation. A user is thus afforded greater security when using the wheeled article.

Yet another configuration enables the restriction means to be adjustable via a user operated control or via a measurement from a sensor so as to provide a variable partial range of actuation of the brake unit. This allows for the restriction means to set a limit of the braking level to a different level based upon the input from the user operated control or the sensor. In one configuration, the user operated control is means to input a weight of the user or an ability of the user. In another configuration, the sensor provides an indication of the current speed, such that the restriction means may continually adjust the mapping of the actuation of the one or more braking means. This is particularly advantageous, as it allows the user to access an appropriate braking force depending upon the current travelling speed; i.e., a lower current speed requires a smaller range of the actuation of the brake unit, e.g., 0 to 10 percent, compared to a higher speed, e.g., 0 to 70 percent. Other sensors, such as a tilt sensor or an incline sensor, may also be provided to enable the restriction means to adjust the limit of the magnitude of the braking force depending on the condition of the wheeled article. A further sensor may include a terrain sensor that is adapted to measure the terrain surrounding the wheeled article.

In an additional or alternative arrangement, the user actuator includes actuation means which is compressed by the user's hand, the travel of the actuation means proportional to the braking force, and wherein the restriction means is provided in the user actuator and adapted to mechanically limit the travel of the actuation means.

In this arrangement, the actuation means is adapted to provide a physical block or restriction on the actuation means, thereby allowing only a part of the actuation of the one or more brake units to be accessed. The mapping of the actuation means to the actuation of the one or more brake units may be 1:1, or may be a different mapping in accordance with the method described above.

Again, this allows a user to be limited to a certain range of the braking force, such that a user cannot apply a braking force that is too large for their current situation, i.e., ability level.

Yet another configuration enables the restriction means to be adjustable via a user operated control or via a measurement from a sensor so as to provide a variable partial range of actuation of the actuation means. This allows for the restriction means to set a limit of the braking level to a different level based upon the input from the user operated control or the sensor. In one configuration, the user operated control is means to input a weight of the user or an ability of the user. In another configuration, the sensor provides an indication of the current speed, such that the restriction means may continually adjust the actuation of the actuation means. This is particularly advantageous, as it allows the user to access an appropriate braking force depending upon the current travelling speed; i.e., a lower current speed requires a smaller range of the actuation of the brake unit and/or actuation means, e.g., 0 to 10 percent, compared to a higher speed, e.g., 0 to 70 percent. Other sensors, such as a tilt sensor or an incline sensor, may also be provided to enable the restriction means to adjust the limit of the magnitude of the braking force depending on the condition of the wheeled article. A further sensor may include a terrain sensor that is adapted to measure the terrain surrounding the wheeled article.

An additional, or alternative arrangement, includes the restriction means being adapted to provide a non-linear actuation of the user actuator, each step of the non-linear actuation requiring a larger force to be applied from the user to actuate the user actuator further, and each step providing a progressively increased magnitude of the braking force.

This arrangement allows for the user to become aware of the different braking forces that are currently being applied to the one or more wheels. In other words, the user may be consciously aware of an appropriate level of braking force owing to the steps provided in the non-linear actuation. For example, a greater compression force may be required to access the top range of the actuation of the actuation means or the brake units than a bottom range.

This may be readily combined with any of the methods discussed above; that is, the mapping may be provided with a stepped force to indicate the change of one braking force to the next, or the accessible range of the mechanically limited actuation means may be stepped in a similar way.

This arrangement is particularly advantageous as it allows a user to be able to access the entire range of the actuation of the actuation means (or allowable range), but provides an indication as to the severity of the braking force to be applied.

A further configuration enables the restriction means to be adjustable via a user operated control or via a measurement from a sensor so as to provide a variable stepped range of the actuation of the actuation means. This allows for the restriction means to set a different force required for the stepped regions, or a different position along the actuation of the actuation means, of the stepped limit based upon the input from the user operated control or the sensor. In one configuration, the user operated control is means to input a weight of the user or an ability of the user. In another configuration, the sensor provides an indication of the current speed, such that the restriction means may continually adjust the actuation of the actuation means. This is particularly advantageous, as it allows the user to access an appropriate braking force depending upon the current travelling speed. Other sensors, such as a tilt sensor or an incline sensor, may also be provided to enable the restriction means to adjust the limit of the magnitude of the braking force depending on the condition of the wheeled article. A further sensor may include a terrain sensor that is adapted to measure the terrain surrounding the wheeled article.

In an alternative or additional arrangement, the restriction means is adapted to limit the braking force according to a series of levels of braking force, wherein the levels of braking force are an amount of force applied to the one or more wheels by the one or more brake units, and each level is accessible via actuation of actuation means provided in the user actuator.

More specifically, a first level of braking force is accessible upon a first actuation of the actuation means, and a second level of braking force is accessible upon a second actuation of the actuation means, the second level of braking force applying a larger magnitude of the braking force to the one or more wheels than the first level of braking force.

Such an arrangement is particularly advantageous as it allows a user to preselect a desired braking force to be applied, and the braking force is continuously applied. In situations such a downhill travelling, this can aid in regulating the maximum speed of a user, and can limit this speed to a safe value depending upon the ability or weight of the user, for example.

Moreover, the actuation means may be actuated in a first direction to sequentially access levels of braking force wherein a next level of braking force accessed in the first direction provides a stronger braking force applied to the one or more wheels than a previous level of braking force, and the actuation means may be actuated in a second direction to sequentially access levels of braking force wherein a next level of braking force accessed in the second direction provides a weaker braking force applied to the one or more wheels than the previous level of braking force.

Such an arrangement permits the user to have full control over the braking level to be set, and is fully adjustable depending upon the user's situation. For example, the user may set a first level at the beginning of the downhill section and decide that it is too great or too weak and subsequently set the next level accordingly by operating the actuation means in one of the two directions.

The concept of different levels of braking force may also be useful in fitness training, whereby a user may purposefully set a braking force as a resistance force, i.e., a force to train against, thereby improving fitness and/or strength.

According to the above, the restriction means may adjustable via a user operated control or via a measurement from a sensor so as to provide a variable partial range of actuation of the actuation means. This allows for the restriction means to set the braking levels to a different levels based upon the input from the user operated control or the sensor. That is, a first level may impart a different braking force depending on certain parameters of the user or wheeled article. In one configuration, the user operated control is means to input a weight of the user or an ability of the user. In another configuration, the sensor provides an indication of the current speed, such that the restriction means may continually adjust the actuation of the actuation means. Other sensors, such as a tilt sensor or an incline sensor, may also be provided to enable the restriction means to adjust the limit of the magnitude of the braking force depending on the condition of the wheeled article. A further sensor may include a terrain sensor that is adapted to measure the terrain surrounding the wheeled article.

In an additional or alternative configuration, any of the speed control systems described above may comprise a hold mechanism, wherein, when the user actuates the user actuator to a certain braking force, the hold mechanism is adapted to maintain the certain braking force regardless of the actuation of the user actuator.

As discussed in relation to the various braking levels, it may be particularly advantageous for a user to select or hold a certain braking force, for example, when travelling downhill or during fitness training.

In other additional or alternative configurations, any of the speed control systems as described may comprise a release mechanism, the release mechanism adapted to release the one or more braking units such that, upon actuation of the release mechanism, the braking force applied to the one or more wheels is removed.

This is particularly advantageous in that, after a braking level is found and maintained, the user may release the braking level in order to reset or readjust the braking level. Moreover, should the restriction means operate incorrectly or set an incorrect level, the release mechanism can release all braking force and override the faulty restriction means.

In one realisation of the invention, the wheeled article may be a roller ski, designed for off-road use, and a corresponding ski pole may be fitted with the user actuator.

The invention also provides a method of speed control for a wheeled article comprising regulating and/or limiting the speed of a wheeled article, including actuating a user actuator, the user actuator linked to one or more braking units of the wheeled article, restricting a limit of the magnitude of a braking force to be applied to the wheeled article by the one or more brake units to a predefined level, and applying the braking force to one or more wheels of the wheeled article.

The invention also provides a use of a speed control system for a wheeled article to regulate and/or limit the speed of the wheeled article.

### Brief description of the Drawings

A better understanding of the features and advantages of the present invention will be obtained by reference to the following detailed description that sets forth illustrative embodiments by way of example only, in which the principles of the invention are utilised, and the accompanying drawings of which:
Figure 1 shows an overview of the basic components of a speed control system of the present invention.
Figure 2 shows an exemplary roller ski using the speed control system of Figure 1.
Figures 3 and 4 show a mudguard for use with the exemplary roller ski of Fig. 2.
Figure 5 shows a mounting plate for use with the exemplary roller ski of Fig. 2.
Figure 6 shows the mounting plate of Fig. 5 mounted to the exemplary roller ski of Fig. 2.
Figure 7 shows a cross section of the brake unit of Fig. 2.
Figures 8 to 10 show a control unit and brake actuation means of the exemplary roller ski of Fig. 2.
Figure 11 shows an exemplary user actuator for use with the speed control system of Fig. 1.
Figure 12 shows a further exemplary user actuator for use with the speed control system of Fig. 1.
Figure 13 shows yet another exemplary user actuator for use with the speed control system of Fig. 1.
Figure 14 shows a further exemplary user actuator for use with the speed control system of Fig. 1.
Figure 15 shows a graph of force vs. travel distance for any of the user actuators of Figs. 11 to 14.
Figure 16 shows a number of actuation patterns of the user actuators of any of Figs. 11 to 14.
Figure 17 shows the user actuators of Figs. 11 to 14 further comprising a hold and release mechanism, a feedback mechanism, and a fail-safe mechanism.

### Detailed Description of the Invention

The present invention is related primarily to a speed control system 1 applied to a wheeled article 2, specifically a roller ski 100, but it should be understood that the speed control system 1 is not limited to a roller ski 100 and may also be applied to other wheeled articles 2, such as skateboards, in-line roller skates, roller blades, bicycles, wheelchairs, baby trolleys or pushchairs, and the like.

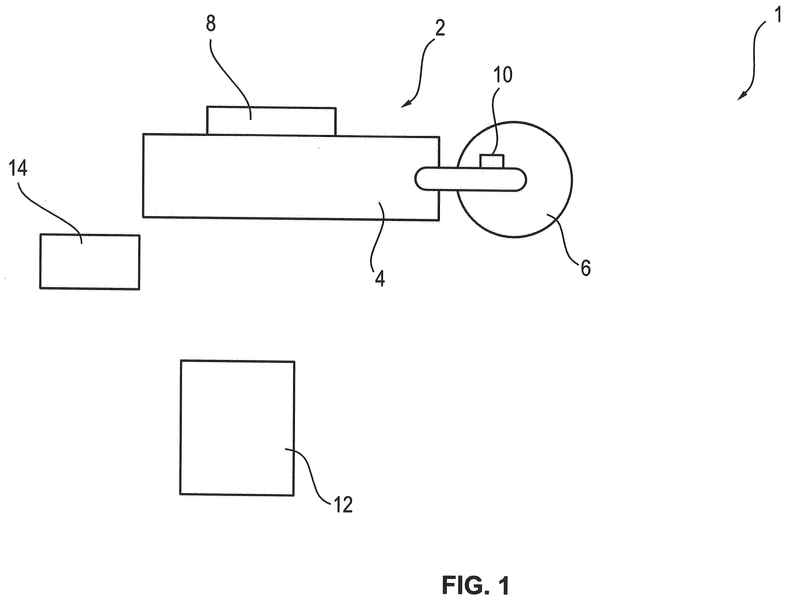

Fig. 1 details a speed control system 1 in accordance with the principles of the invention. In Fig. 1, a wheeled article 2 is provided that includes a body 4 and one or more wheels 6. The wheeled article 2 is not limited to the number of wheels 6 that it possesses, and may include any number of wheels 6.

In accordance with the invention, a control unit 8 is provided. In Fig. 1, the control unit 8 is shown mounted to the body 4, although the control unit 8 may be mounted at any location. The control unit 8 is provided to control one or more brake units 10 that are provided to the wheeled article 2. The one or more brake units 10 may be provided to any number of the one or more wheels 6. In one configuration, each wheel 6 is provided with its own brake unit 10. In other configurations, a single brake unit 10 is provided to multiple wheels 6 and acts on all the wheels 6 simultaneously or individually.

The one or more brake units 10 are adapted to provide a braking force or resistive force to the one or more wheels 6. The braking force or resistive force counteracts the rotational forces of the one or more wheels 6, thereby reducing the rotation speed of the one or more wheels 6. The control unit 8 may communicate with the one or more brake units 10 either directly via a wired connection or via wireless connection.

The control unit 8 is further adapted to receive a signal from a user actuator 12. The user actuator 12 is operated by a user of the wheeled article 2 and transmits the signal to the control unit 8. The user actuator 12 may preferably be in wireless communication with the control unit 8, such as via an RF communication, although the user actuator 12 may also be provided with a direct wired communication. The signal is indicative of a level of braking force or resistive force that the user wishes to apply to the one or more wheels 6 of the wheeled article 2.

The present invention is also provided with a restriction means 14 that is adapted to limit the magnitude of the braking or resistive force applied to the one or more wheels 6. In other words, the restriction means 14 controls either directly or indirectly the actuation of the one or more brake units 10. The specific details of the restriction means 14 will be explained by way of further examples. In addition, as will become clear from the examples, the location of the restriction means 14 is not particularly limited. For example, the restriction means 14 may be provided in the user actuator 12, in the control unit 8, or even in the one or more brake units 10.

As one example, the restriction means 14 is adapted to limit the maximum braking force or resistive force applied to the one or more wheels 6. That is, a user may select or desire a certain level of braking force, and the restriction means 14 determines if the certain level of braking force is appropriate and subsequently apply the braking force or a reduced force to the one or more wheels 6. In other words, the restriction means 14 may provide a magnitude of the braking force that is less than 100 percent of the maximal braking force that would otherwise be accessible to the user.

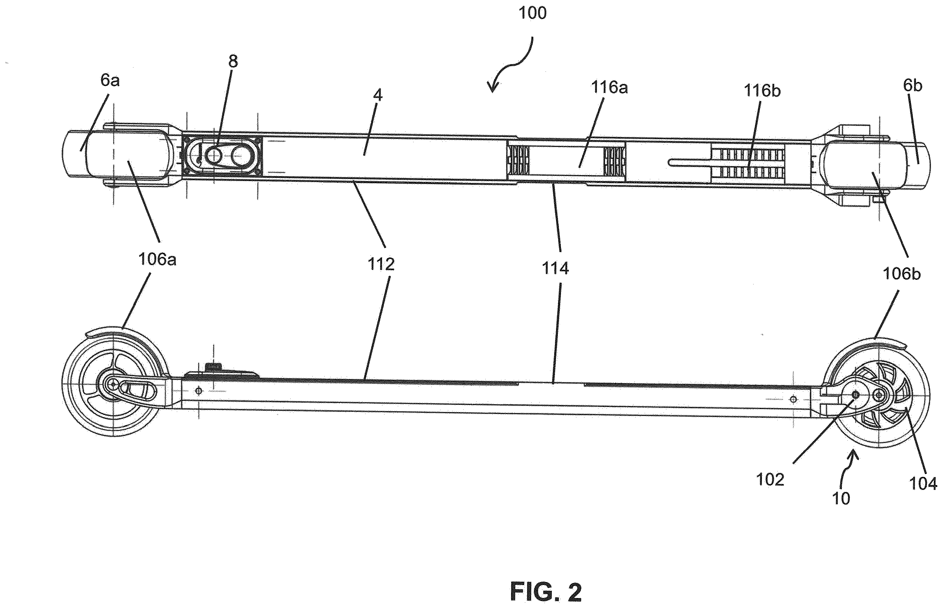

In Fig. 2, a specific example of the wheeled article 2 is shown, namely a roller ski 100. The roller ski 100 comprises the body 4 and one or more wheels 6a, 6b. In the specific example of Fig. 2, the body 4 is generally longitudinal and spans a distance from one end to the other. The distance is not particularly limited, although may be restricted by competition or sporting regulations, for example. In the example, a front wheel 6a is positioned at a first end of the body 4, and a rear wheel 6b is positioned at a second end of the body 4 opposite the first end. However, the roller ski 100 is not limited to comprising only two wheels 6a, 6b, and may comprise only one or several wheels 6a, 6b mounted to the body 4 at any location; for example, one wheel 6 could be mounted at the centre portion of the body 4.

In Fig. 2, a single brake unit 10 is provided to the exemplary roller ski 100, and may be provided so as to contact the rear wheel 6b. In one arrangement, the brake unit 10 may be a hydraulic brake unit and comprise a brake piston 102 and a brake disc 104, wherein the brake piston 102 is provided so as to actuate against the brake disc 104 and provide a braking or resistive force thereto. When the brake piston 102 is actuated, the braking or resistive force causes the rear wheel 6b to slow down.

An alternative for the one or more brake units 10 is to use an eddy-current braking means. In this sense, an electric motor may be employed as the one or more brake units. In one configuration, a brake disc 104 is integrated with the rim of one or more of the one or more wheels 6. Typically, the rim of the one or more wheels 6 may be cast from aluminium or an 11 % silicon alloy, although the rim is not limited to this. Essentially, the rim is adapted to produce an eddy-current in response to a magnetic field applied thereto. In the correct configuration, i.e., current direction and direction of the magnetic field, a resistive force may be generated to oppose the rotary motion of the brake disc 104. In other words, an eddy-current is induced in the rim of the one or more wheels 6 and opposes the rotation force thereof.

The location of the brake unit 10 is not limited to the rear wheel 6b as shown in Fig. 2, and may be provided on the front wheel 6a. Alternatively, both the front and rear wheels 6a, 6b can be provided with a brake unit 10. The roller ski 100 further comprises the control unit 8, which is adapted to receive the signal from the user actuator 12.

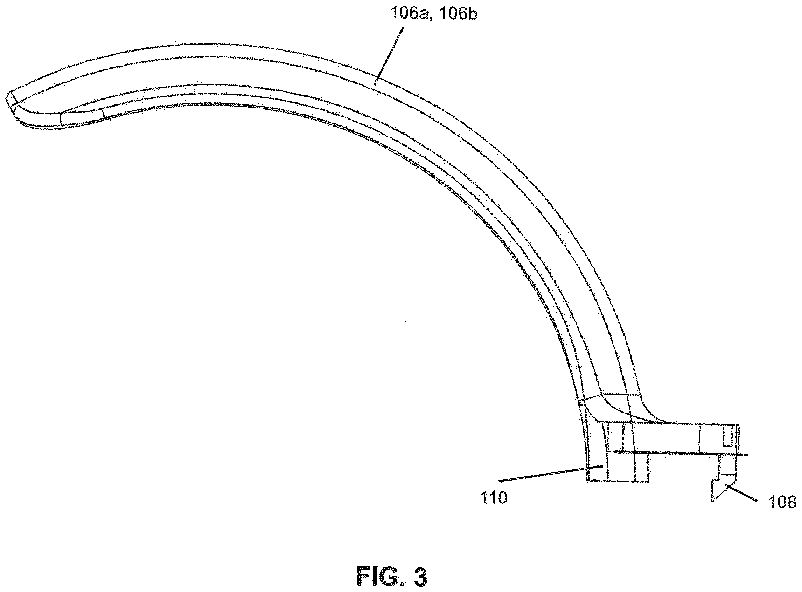

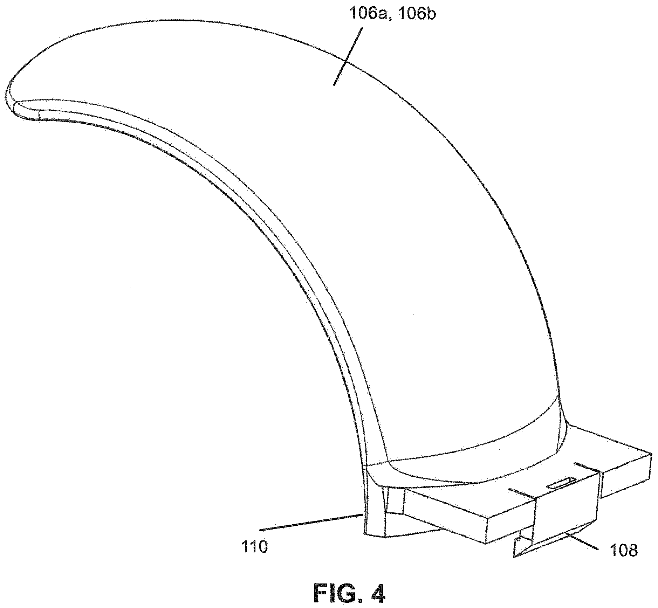

The roller ski 100 may also comprise a front mudguard 106a and a rear mudguard 106b that are positioned over the front and rear wheels 6a, 6b respectively. The mudguards 106a, 106b provide additional protection to the wheels 6a, 6b, and the one or more brake units 10 from dirt, gravel, water, or the like. As shown in Figs. 3 and 4, the mudguards 106a, 106b may be provided with clips 108 and protrusions 110 that enable the mudguard to be fixed to, but also removed from, the body 4. To accommodate this configuration, the body 4 may be provided with corresponding recesses or holes that receive the clip 108 and protrusion of a mudguard 106a, 106b. Preferably, the clip 108 and protrusion 110 enable a snap-fit of the mudguard 106a, 106b to the body 4. The mudguards 106a, 106b may also be provided with braking lights that indicate when the wheeled article 2 is braking or a level of braking, i.e., the light intensity or colour may be proportional to the braking force.

The roller ski 100 may also preferentially be provided with an L-shaped lip 112 that is provided around the outer periphery of the body 4. As shown in Fig. 2, the L-shaped lip 112 may extend along the longest sides of the body 4 and towards a top surface of the body 4. A recessed portion 114 may be provided in the L-shaped lip 112; that is, a portion where the L-shaped lip 112 is not present. Moreover, the top surface of the body 4 may additionally be provided with one or more attachment regions 116, and preferably, front and rear attachment regions 116a and 116b. The attachment regions 116 may be machined into the top surface of the body 4, or may be formed separately and subsequently attached to the top surface of the body 4.

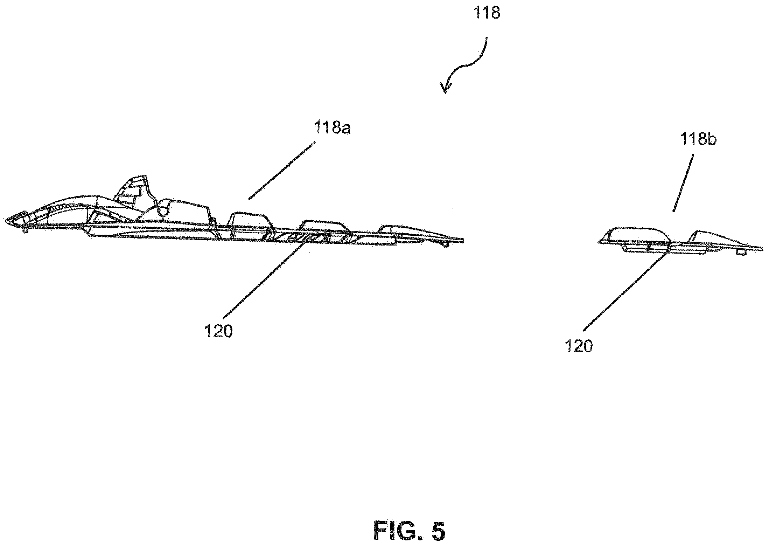

The attachment regions 116 are adapted to receive a mounting plate 118. The mounting plate 118, as shown in Fig. 5, may be divided into two sections, a front mounting plate 118a and a rear mounting plate 118b. Alternatively, the mounting plate 118 may be a single integrated element including both the front and rear mounting plates 118a, 118b. The front mounting plate 118a, or front part of the integrated mounting plate 118, is adapted to mount with the front attachment region 116a, and the rear mounting plate 118b, or rear part of the integrated mounting plate 118, is adapted to mount with the rear attachment region 116b.

The mounting plate 118 may also be held in place via engagement recesses 120, wherein the engagement recesses 120 are configured to engage with the L-shaped lip 112. In other words, the engagement recess 120 is provided in sliding engagement with the L-shaped lip 112, resulting in the mounting plate 118 being stably attached to the body 4. The shape of the engagement recesses 120 is not particularly limited but should sufficiently accommodate the L-shaped lip 112.

To attach the single integrated mounting plate 118, the front part of the mounting plate 118 is positioned over the recessed portion 114 such that the engagement recess 120 thereof is aligned with the L-shaped lip 112. More specifically, the engagement recess 120 is aligned with the L-shaped lip 112 in a forward direction; that is, the part of the L-shaped lip 112 that extends from the recessed portion 114 to the front wheel 6a. A part of the mounting plate 118, namely the rear part thereof, may extend beyond the recessed portion 114. In this case, the mounting plate 118 may be made from a flexible material. Accordingly, the rear part of the mounting plate 118 is flexed upwards so as to allow for the engagement recess 120 at the front part to align with the L-shaped lip 112.

Once aligned, the mounting plate 118 is moved in a forward direction, i.e., towards the front wheel 6a, such that the engagement recess 120 is in contact with the L-shaped lip 112. Furthermore, the mounting plate 118 is moved forwards to such an extent that the rear part of the single integrated mounting plate 118 is able to be aligned with the L-shaped lip 112. In other words, the rear part of the mounting plate 118 is positioned in the recessed portion 114 such that the engagement recess 120 is aligned with the L-shaped lip 112, and more specifically, with the part of the L-shaped lip 112 that extends from the recessed portion 114 to the rear wheel 6b. In such a configuration, the flexion of the mounting plate 118 is no longer required. Once aligned, the mounting plate 118 is moved in a rearward direction, i.e., towards the rear wheel 6b, until the mounting plate 118 is aligned with the attachment regions 116. Subsequently, the mounting plate 118 may be held in a relatively fixed engagement on the top surface of the roller ski 100 via interaction with the attachment regions 116.

In the case where the mounting plate 118 comprises front and rear mounting plates 118a, 118b, one exemplary method to attach the mounting plates 118a and 118b in the specific example of Fig. 2 is now described. The rear mounting plate 118b is positioned over the recessed portion 114 such that the engagement recess 120 thereof is aligned with the L-shaped lip 112. Once achieved, the rear mounting plate 118b is moved towards the rear wheel 6b until it is correctly engaged with the rear attachment region 116b. Thereafter, the front mounting plate 118a is positioned over the recessed portion 114 with its corresponding engagement recess 120 aligned with the L-shaped lip 112. A part of the front mounting plate 118a may extend beyond the recessed portion 114 but may be flexed upward so as to allow for the correct alignment of the engagement recess 120 and the L-shaped lip 112. As with the rear mounting plate 118b, the front mounting plate 118a is moved towards the front wheel 6a until it is correctly engaged with the front attachment region 116a.

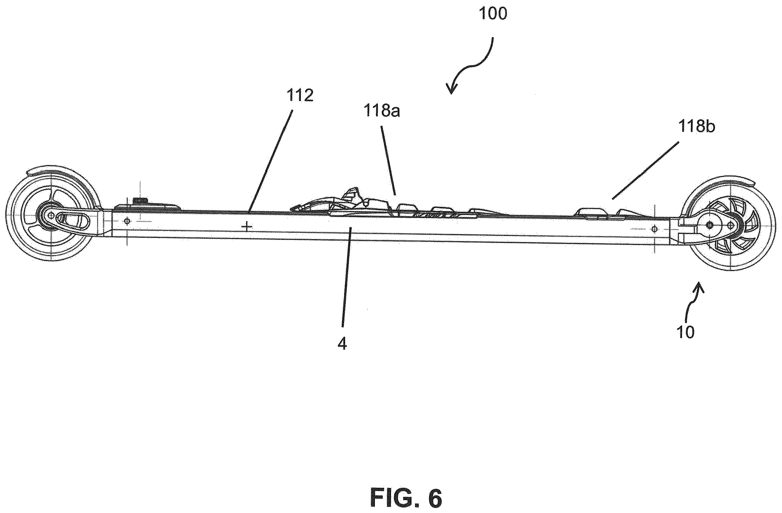

Fig. 6 shows the roller ski 100 when the mounting plates 118a, 118b of Fig. 5 are attached thereto. It is also apparent that Fig. 6 shows the roller ski 100 when the single mounting plate 118 is attached thereto. In some configurations, the front mounting plate 118a may be provided with a blanking portion that, when attached to the body 4, fits into the recessed portion 114, thereby filling-in the recessed portion 114. This is particularly advantageous in that the recessed portion 114 is not exposed and is thus prevented from inadvertently interacting with obstacles, such as twigs or stones. This effect is further enhanced when the leading edges of the mounting plates 118a, 118b are rounded or curved, which may allow obstacles to deflect along the contour of the curve.

The mounting plate 118 or mounting plates 118a, 118b are preferably adapted to provide a binding for a ski boot or the like. In this regard, the front mounting plate 118a, or front part of the mounting plate 118, may be adapted to receive a toe portion of the ski boot, while the rear mounting plate 118b, or rear part of the mounting plate 118, may be adapted to receive a heel portion of the ski boot. The distance between the front and rear mounting plates 118a, 118b may be adjustable by fixing the mounting plates 118a, 118b at different locations of the attachment regions 116a, 116b, so as to accommodate for different sizes of the ski boot.

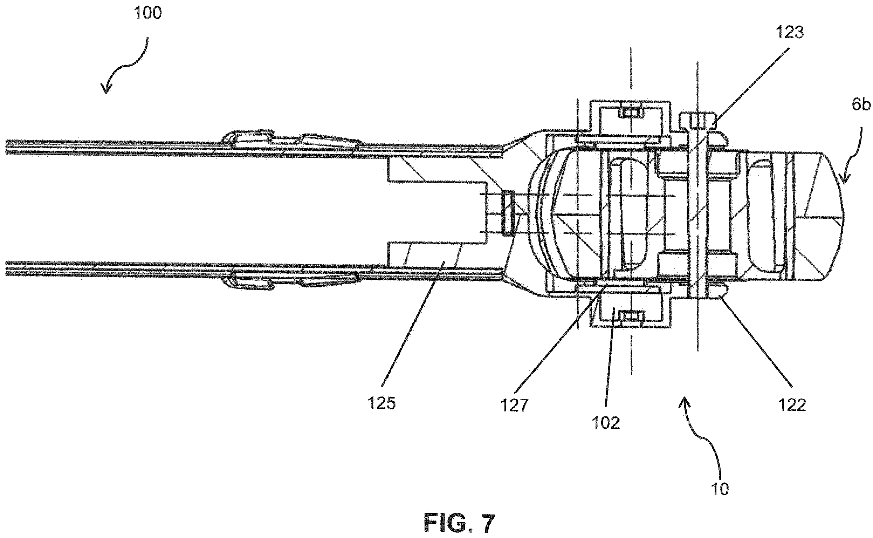

Fig. 7 shows a cross sectional view of an exemplary brake unit 10. In Fig. 7, the rear wheel 6b may be attached to the body 4 via a yoke member 122 and a corresponding axel 123. The axel 123 is threaded at one end and may be screwed into a corresponding threaded side of the yoke 122. The same basic configuration may be realised with the front wheel 6a, and the above may be utilised with or without a brake unit 10.

In Fig. 7, a brake calliper 125 forms a housing of the one or more brake units 10. The brake piston 102 may be positioned on one side of the yoke 122 and correspondingly attached thereto via the brake calliper 125. While not shown in the Figure, the disc brake 104 is provided on a side of the rear wheel 6b such that the brake piston 102 may contact the disc brake 104 and may do so via a brake pad 127. In some cases, as shown in Fig. 7, the brake unit 10 may include two brake pistons 102 positioned either side of the rear wheel 6b. In correspondence thereto, a second disc brake 104 may be provided on the opposite side of the rear wheel 6b. In such a configuration, the braking force may be evenly applied and a stronger and/or more controlled speed reduction may be realised.

Regarding the eddy-current breaking means, magnetic elements, preferably electromagnetic elements, may be installed in place of the brake pistons 102 of a hydraulic brake system. Therefore, when a current is passed through the electromagnetic elements, an electric field is established that induces the eddy-current in the rim. The eddy-current is proportional to the strength of the magnetic field applied to the rim, and is thus dependent on the current passing though the magnetic elements. Accordingly, the control unit 8 can be adapted, in this configuration, to actuate the one or more brake units 10 by controlling a variable resistor connected to the electromagnetic elements. The control unit 8 may use battery 126, described later, mounted in the body 4, or may use an alternative power source. In addition, the one or more brake units 10 may be adapted to generate electricity to charge the battery 126 during rotation of the one or more wheels 6. The electric power generated may also be used to drive the braking lights of the mudguards 106a, 106b.

This arrangement is advantageous in that the brake unit 10 is provided essentially in the rim itself, or the hub thereof. Indeed, an alternative arrangement is to use the wheel axel 123 as a conductive element and at least one magnetic element in the hub of the one or more wheels 6. Accordingly, passing a current through the axel 123 causes generation of a magnetic field which may oppose the magnetic field set up by the axel 123.

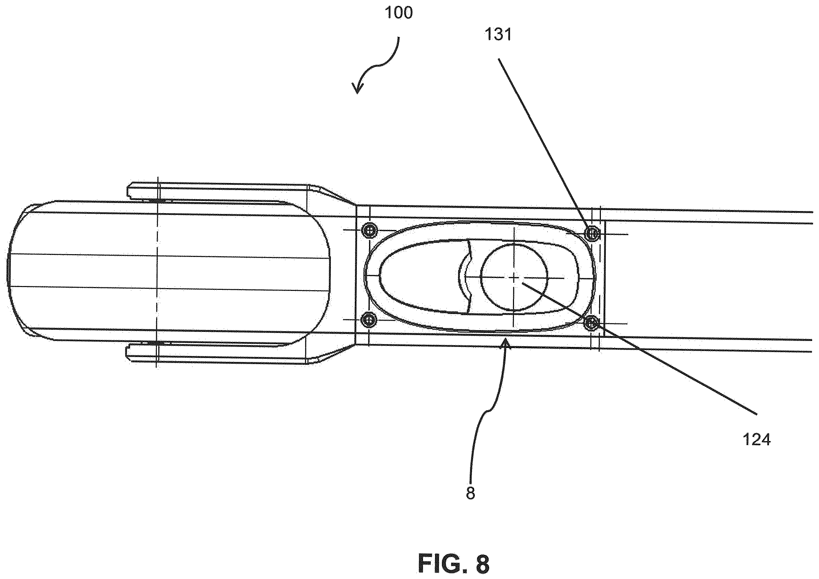

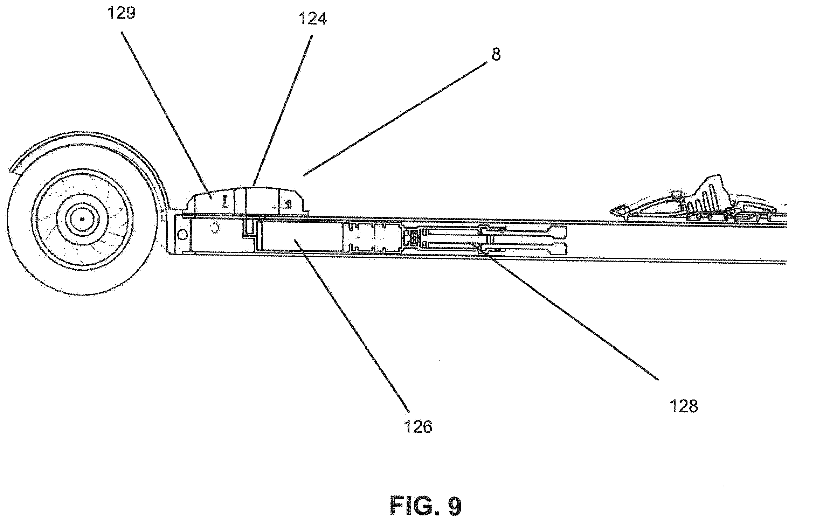

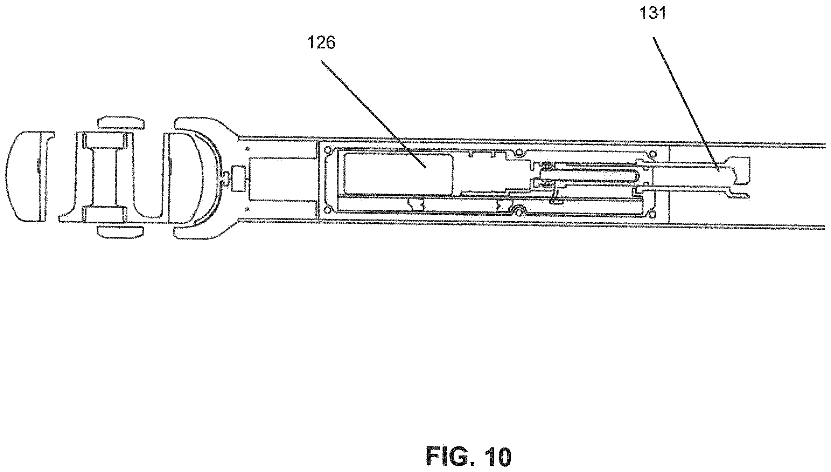

Figs. 8, 9, and 10 show the control unit 8 of the roller ski 100 in more detail. In the Figures, the control unit 8 is provided on an upper surface of the body 4 and includes a control 124. The control 124 may be adapted to perform a number of tasks depending upon the specific configuration being used. In one preferred configuration, the control 124 may be a USB dock adapted to receive a connection from an external source, such as a computer, smartphone, or the like, wherein the external source may be used to configure the settings of the control unit 8. In Fig. 9, the control 124 may be used to calibrate means used to actuate the brake piston 102 of the brake unit 10. As one example, the means may be a pump 128, that is adapted to pump hydraulic brake fluid to the brake piston 102. The pump 126 may be actuated by the control unit 8 to compress the hydraulic brake fluid by an amount indicated by the user actuator 12. An end of the pump 128 may be fluidly connected to the brake piston 102, or brake pistons 102, such that, upon compression of the hydraulic fluid, the brake piston 102 is actuated towards the brake disc 104 and the braking force applied thereto.

The control unit 8 may also comprise an antenna 129, such as an RF antenna, adapted to receive the wireless signal from the user actuator 12. The control unit 8 may also be connected to an integrated battery 126. The integrated battery 126 can provide power to the control unit 8 or the pump 128 and is provided either in the control unit 8 or is preferably integrated with the body 4. To connect the control unit 8 to the body 4, screw holes 131 are provided. The screw holes 131 extend through a flange of the control unit 8 and allow a screw to be screwed into the body 4. Corresponding screw holes 131 including a threaded member may be provided in the body 4. In some embodiments, the pump 128 or battery 126 is provided with screw holes 131 that align with the screw holes 131 of the control unit 8. Utilising an O-ring positioned between the pump 128 or battery 126 and the control unit 8 ensures a water-tight seal, thus preventing water or dirt from entering the working components of the pump 128 or control unit 8.

In Fig. 9, the rotatable control 124 may be provided to adjust the initial level of compression of the hydraulic fluid. Over time or excessive use, the initial level of compression may decrease, thus meaning that the fluid within the fluid containing cylinder cannot be compressed to the same level. Adjusting the rotatable control 124 may allow for this to be compensated for and realise quick adjustment of the initial level of compression.

The user actuator 12 is a component provided to communicate with the control unit 8, and is preferably provided as a separate component from the wheeled article 2. In one configuration, the user actuator 12 is provided with a wired connection to the control unit 8 of the wheeled article 2. However, a preferred configuration is one where the user actuator 12 is provided with a wireless transmitter and/or receiver that is adapted to transmit or receiver a wireless signal to or from the control unit 8. In such a configuration, the control unit 8 may be provided with the antenna 129.

The user actuator 12 is adapted to be operated by the user of the wheeled article 2. Preferably, the user actuator is disposed so as to be operated by the hand of a user, and may be attached to another component or separately provided. For example, the user actuator 12 may be held by the user in their hands, or it may be integrated with a protective glove or the like. Equally, the user actuator 12 may be integrated with the body 4 of the wheeled article 2 and accessible to the user during operation of the wheeled article 2.

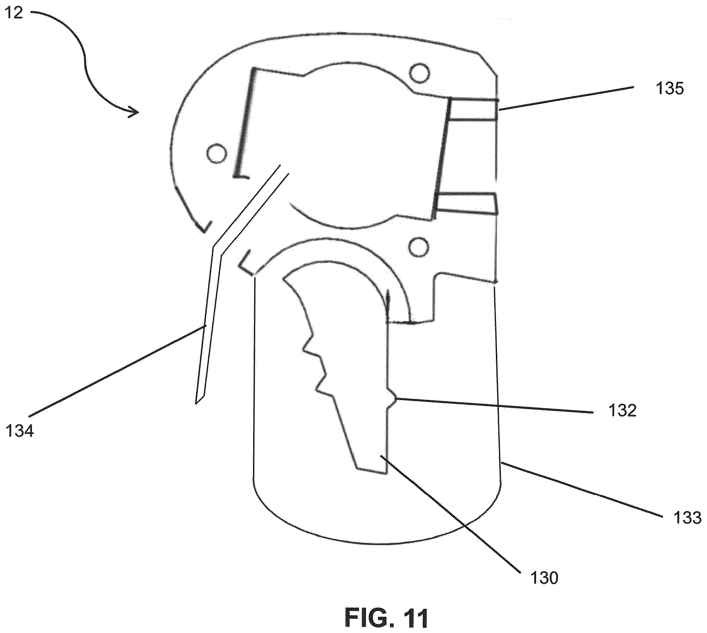

In the situation of the roller ski 100, the user actuator 12 is preferably disposed in one or more of the ski poles used to operate the roller ski 100. Many existing ski poles are manufactured so as to be able to remove and change a grip portion at the upper section of the ski pole. Therefore, the user actuator 12 may be provided with an insert portion 130, wherein the insert portion 130 is adapted to be received in a hollow top portion of a ski pole. To ensure a secure fit, the user actuator 12 may also be provided with a threaded portion 132 which may be screwed into the ski pole and received via a corresponding threaded portion therein. In other configurations, the insert portion 130 may include flanges in place of threaded portion 132, wherein the flanges are adapted to engage with corresponding recesses in the ski pole. The flanges may engage with the recesses in a slide and twist motion. In one configuration, the recesses may be an L-shape with the long edge of the L-shape extending along the longitudinal axis of the ski pole. Thus, the flanges are slid along the long edge of the L-shape and then twisted to engage the short edge. Alternatively, the flanges may engage the recesses in a press-fit manner by allowing the flanges to flex while being pushed into the ski pole and releasing the tension when the flanges contact the recesses. Moreover, as shown in Fig. 11, the user actuator 12 may be provided with a silicon sleeve 133 that is adapted to fit over the outer surface of the ski pole.

The user actuator 12 is typically adapted to be actuated and subsequently engage the brake unit 10. In Fig. 11, the exemplary user actuator 12 is provided with actuation means 134, and more specifically, a trigger. The trigger may be pivoted about an axis so as to allow a rotatory movement of the trigger. Alternatively, the trigger may be adapted to slide within the user actuator 12; in other words, the trigger may be operated in a front-to-back manner and slide from one position to another while maintaining a similar pitch.

In other configurations, the actuation means 134 could be a push or slide button. The actuation means 134 is not particularly limited to any specific design, and could be any number of suitable components.

The user actuator 12 is linked in some way to the one or more brake units 10 of the present invention. Accordingly, when a braking force or resistive force is to be applied to the one or more wheels 6 of the wheeled article 2, a user operates the actuation means 134. That is, direct actuation of the actuation means 134 causes the user actuator 12 to communicate with the control unit 8, which in turn operates the one or more brake units 10.

Preferably, this is achieved via a wireless signal and thus the user actuator 12 includes a power source 140 to provide power thereto. The power source 140 may be any power source capable of providing the desired power, such as a battery, a photovoltaic, a gyroscopic power source, etc. Moreover, a light element 135, such as an LED, may be provided on the user actuator 12 to indicate a normal operating condition, a power failure condition, a signal loss condition, or the like. Equally, the user actuator 12 may also be provided with a display to display any number of parameters. Indeed, the user actuator 12 (or the wheeled article 2) may also be equipped with a GPS receiver and location information may be displayed on the display.

The principle operations of the user actuator 12 and the restriction means 14 will now be described by way of examples. All of the user actuators 12 discussed below may employ any combination of the functional features discussed above.

### First example

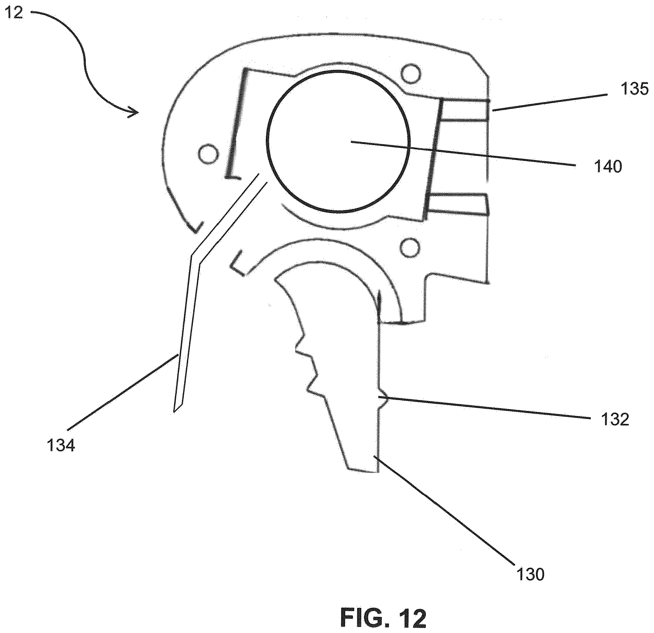

With reference to Fig. 12, the first example of operation is explained. As stated above, the actuation means 134 is actuated by a user when a braking force is to be applied to the one or more wheels 6. Whether the actuation means 134 is a pivoted trigger, sliding trigger, push button, or otherwise, the actuation means 134 is provided with a certain range of travel. That is, the actuation means 134 is adapted to move from a start or initial position that imparts no braking force to the one or more wheels 6, to a final position that imparts a maximal braking force.

In the first example, the range of travel of the actuation means 134 is 100 percent. That is, the designed range of the actuation means 134 is accessible by the user when operating the actuation means 134.

The restriction means 14 may be provided in the user actuator 12, but may equally be located in the control unit 8. In either situation, the actuation means 134 provides an indication of the braking force to be applied to the one or more wheels 6. If the restriction means 14 is located in the user actuator 12, as in Fig. 12, then the actuator means 134 may be linked directly thereto. That is, actuation of the actuation means 134 sends a signal, electrical or mechanical, to the restriction means 14.

The restriction means 14 may be preprogramed to alter or modify the received signal from the actuation means 134. The programming may be dependent on a number of factors as will be discussed below. In the first example, however, the restriction means 14 is adapted to convert the input signal from the actuation means 134 to a reduced braking range. For example, the user may operate the actuation means 134 to a specific level, but the restriction means 14 may be adapted to limit the magnitude of the applied braking force.

Suppose, for example, that the user is a beginner and it is determined that the user of that particular ability should only require 50 % of the maximal braking force. According to this example, the actuation of the actuation means 134 is mapped at a ratio of 2:1 to the actuation of the one or more brake units 10. Therefore, when the user actuates the actuation means 134 fully, i.e., 100 %, the applied braking force is only a maximum of 50 % of the actual braking force achievable by the one or more brake units 10. Accordingly, 50 % of the full actuation of the actuation means 134 is mapped to 25 % of the full braking force in this example.

In an alternative configuration, the restriction means 14 may be located in the control unit 8. The principles of operation may still be the same as described above, although the signal from the actuation means 134 may be transmitted from the user actuator 12 to the control unit 8. The restriction means 14 then adjusts the signal according to the mapping and the control unit 8 uses the adjusted signal to actuate the one or more brake units 10.

The mapping of the travel of the actuation means 134 to the actuation of the one or more brake units 10 is not particularly limited. Indeed, any mapping may be performed, such that the maximal braking force accessible to the user is reduced from the maximum actuation of the one or more brake units 10. For example, the full travel of the actuation means 134 may be mapped to any one of 0 to 90 %, 0 to 80 %, 0 to 70 %, 0 to 60 %, 0 to 50 %, 0 to 40 %, 0 to 30 %, 0 to 20 % or 0 to 10 % of the full actuation of the one or more brake units 10.

The mapping is not limited to these values, and can be any range. Indeed, the range does not have to start at zero percent and it may be that a constant braking force is required. Equally, the mapping may also be adjustable before or during operation of the wheeled article 2. The adjustment of the mapping may be performed on the basis of a user operated control located at the user actuator 12 or at the control unit 8. One configuration may use the control 124 of the control unit 8 as a means for adjusting the mapping. Alternatively, the mapping may be performed as a result of a measurement from a sensor, the sensor being located in the wheeled article 2 or the user actuator 12.

With such a configuration, the maximum amount of braking force available to the user of the wheeled article 2 or roller ski 100 is reduced depending upon the programed restriction of the restriction means 14. This means that an unskilled user is not provided with the full capabilities of the one or more brake units 10, and therefore cannot inadvertently apply an unsafe braking force to the one or more wheels 6 potentially causing a locking of the wheels 6 resulting in a loss of control.

A variation on this example involves a limiting of the braking force to a specific level. That is, the full actuation of the actuation means 134 may be provided to the user, but the restriction means 14 is adapted to alter the signal and limit the maximum braking force. For example, when the user actuates the actuation means 134 to 50 %, the restriction means 14 also allows 50 % of the braking force to be applied. However, further actuation of the actuation means 134 does not increase the braking force applied to the one or more wheels 6. That is, in the above example, 51 % to 100 % actuation of the actuation means 134 keeps the braking force at 50 %.

The advantages of this modified example may be that the user inherently knows how much braking force they should be applying, i.e., according to normal operation of the actuation means 134, but is prevented from applying an overly excessive braking force in a situation of panic, for example.

Further, the example or modified example may be adapted to determine a time that the actuation means 134 is held at a fully actuated position. If the time is longer than a predetermined threshold, then the restriction means 14 may be adapted to alter the limit. For instance, suppose the limit on the magnitude of the braking force is 50 %, and a predetermined time that the actuation means 134 is fully actuated is surpassed, then the restriction means 14 may alter the limit of the magnitude of the braking force to 70 %, for example. In this way, the user is limited from applying a maximal force in a panic situation but, should more force be required to slow the wheeled article 2 down, the user is able to access such by compressing the actuation means 134 further.

### Second example

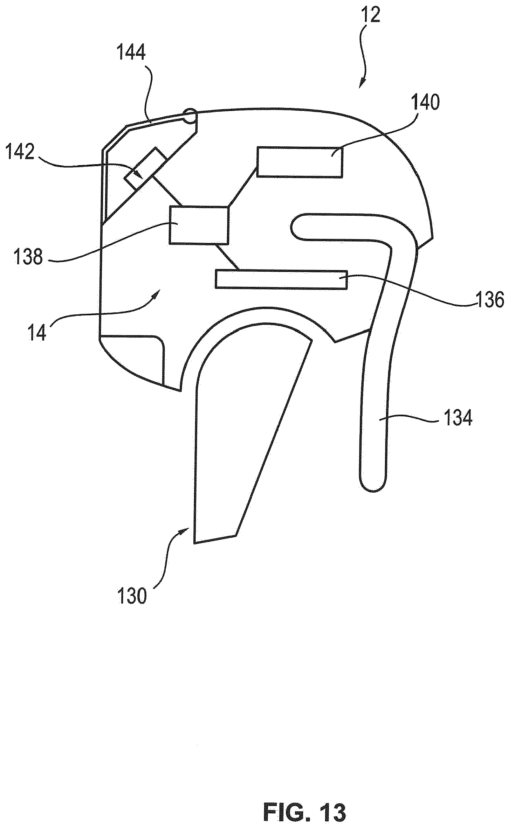

The second example is similar to the first example, but differs in that a mechanical limit on the actuation of the actuation means 14 is provided. Referring to Fig. 13, the restriction means 14 may comprise a mechanical stopper 136, such as a pin or screw. The mechanical stopper 136 is provided to physically limit the travel of the actuation means 134. For example, the mechanical stopper 136 may be adjusted to limit the movement of the actuator means 134 to only 50 % of its capability.

The mechanical stopper 136 may be adjustable so as to increase or decrease the available travel of the actuation means 134 to the user. This could be via a mechanical adjustment, such as the user physically adjusting the mechanical stopper 136; in the case of a screw, for example, the user tightens or loosens the screw via a screw driver or the like. Alternatively, the adjustment may be performed via the use of driving means 138 that is adapted to drive the mechanical stopper 136 closer to or further from the actuation means 134. In such a configuration, the power source 140 may provide power to the driving means 138.

In Fig. 13, the mechanical stopper 136 is adjusted via a rotary clicker 142. The rotary clicker 142 may be rotated clockwise or anticlockwise to either increase or decrease (or vice versa) the range of travel of the actuation means 134. That is, the rotary clicker 142 may be rotated by a certain number of degrees to acquire the next setting of the limit of the range of the actuator means 134. In other words, the rotary clicker 142 is provided with fixed positions corresponding to fixed settings of the mechanical pin 136, wherein only these settings are accessible to a user.

This enables easy adjustment of the travel of the actuator means 134. The rotary clicker 142 may be provided with means to enable a "click" to be heard when the next setting is obtained. Equally, the rotary clicker 142 may be provided with symbols or written text indicating the settings of the mechanical stopper 136. To prevent inadvertent activation or adjustment of the mechanical stopper 136, the user actuator 12 may also be provided with a cover 144. The cover 144 may adapted to operate in any way, such as via a hinge or a sliding engagement.

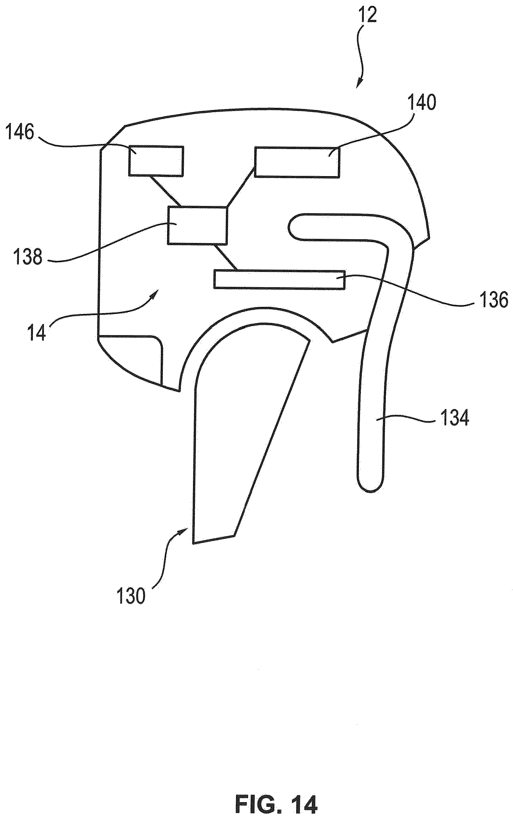

In an alternative arrangement, the adjustment of the mechanical stopper 136 may be automated. One or more sensors may be provided, either in the user actuator 12 or external thereto, and may be in communication with a receiver 146. The receiver 146, as shown in Fig. 14, may be adapted to receive the output of the one or more sensors and the restriction means 14 may be further adapted to automatically adjust the position of the mechanical stopper 136 via the driving means 138 and power source 140.

An automated arrangement enables an unskilled user to readily use the wheeled article 2 or roller ski 100 with minimal interaction with the wheeled article 2 or roller ski 100, and ensure that a safe and controlled braking force is provided.

Moreover, the first and second examples, in some arrangements, may be combined. That is, a mechanical limit may be applied to the travel of the actuator means 134 and the resulting available travel is mapped to a certain range. Such an arrangement may be advantageous in fine tuning the speed control system. For example a "beginner level" could be set by the mechanical stopper 136 and a "beginner plus level" could be further set by the mapping method. This may be useful for progressing with the training of a user.

### Third example

The third example includes providing a non-linear mapping of the actuation of the actuation means 134.

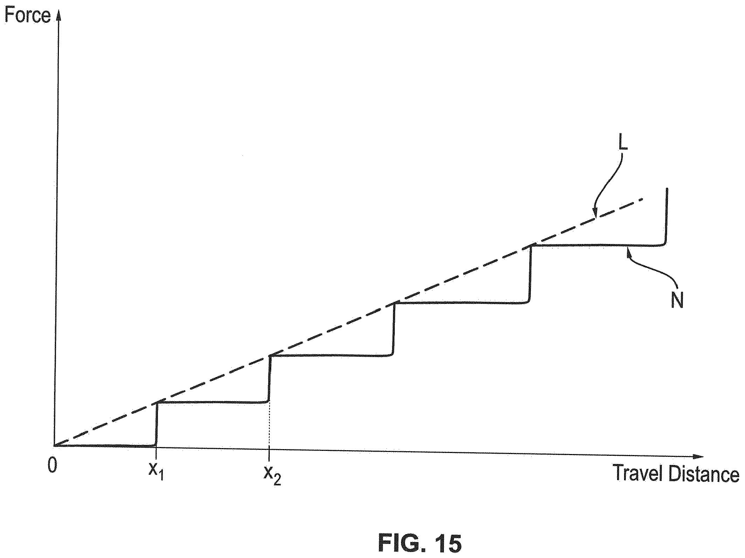

In this example, the user actuator 12 may be provided with a full range of actuation. However, the actuation of the actuation means 134 is provided such that the actuation of the actuation means 134 is staggered. Fig. 15 shows a graph of force against travel distance. In operation of the actuation means 134, the user may be provided with a feedback force. In a wired connection between the actuator means 134 and the one or more brake units 10, this is the contact force of the brake piston 102 or brake pads 127 actuating against the disc brake 104 or the wheel 6.

In the linear case, the feedback force is directly proportional to the travel distance or actuation distance of the actuation means 134, as indicated by the line L. In the third example, the feedback force is applied non-linearly, as exemplified by the line N. According to line N, when the actuator means 134 is actuated, the feedback force is applied in steps. For instance, from 0 to x₁, the feedback force is zero, however the feedback force increases to a second level between x₁ and x₂. The third example does not require a stepped profile as shown in Fig. 15, but may be a quadratic or parabolic type profile.

To prevent the application of excessive braking force, the restriction means 14 enables a varying level of feedback force for the actuation of the actuation means 134. For example, a user must apply a certain minimal force between 0 and x₁ to engage a first range of the braking force. The user must actuate the actuation means 134 by a larger force to access the next part of the range of the braking, i.e., between x₁ and x₂. The sudden increase in force required at point x₁ will alert the user to the fact that the braking force is about to be changed to the next range, and may be excessive, for example.

In this situation, the full range of braking force is accessible but requires a larger force to be applied to the actuator means 134 to access the entire range. In other words, the restriction means 14 restricts the accessibility of the entire range of the braking force, by adjusting the feedback force and making it more difficult for a user to go from no actuation to full actuation. Indeed, the levels of actuation can be adjusted via a user control or via sensors, as in the first and second examples.

A variation of this method involves providing different levels of braking force, rather than simply the next range, in conjunction with the feedback force. That is, from 0 to x₁ a first braking force is applied, and from x₁ to x₂ a second braking force, wherein the braking force is the same for the entire partial range x₁ to x₂ or 0 to x₁.

The third example is also realised in conjunction with the first and second examples above. That is, the mapping of the first example can be mapped as described but parts of the mapped range require more force to access. Equally, the accessible range provided by the mechanical stopper 136 can also be arranged to provide a staggered feedback force.

### Fourth example

In the fourth example, the restriction means 14 may be adapted to provide a series of levels of braking force. For example, a first level may apply a braking force of 2 Nm to the one or more wheels 6, a second level may apply a braking force of 6 Nm, etc. The levels themselves, i.e., the magnitude of the force applied, can be adjusted via a user control or via the information provided by a sensor, in much the same way as the first example adjusts the mapping ratio.

To access the different levels, the user actuates the actuation means 134 a series of times. For example, a first actuation of the actuation means 134 engages the first braking level. The user may then release the actuation means 134 and compress the actuation means 134 a second time to access the second level, and so on.

The compression and releasing of the actuation means 134 may be predefined in this case. That is, a "compression" to access the next level of braking does not have to be 100 % compression, but may be 70 % for example. Equally, a "release" of the actuator in order to then actuate the actuator a further time does not have to be 0 % compression, but may be 30 % for example. Passing these thresholds allows for the next braking level to be reached, without necessarily utilising the full range of travel of the actuation means 134.

Accordingly, upon actuation of actuation means 134 to the next level of the braking force, the restriction means 14 is adapted to provide the control means 8 with a signal indicative of either the braking level or the actual braking force.

In this example, the user can set a constant braking force that is maintained for the duration of the use of the wheeled article 2. This is particularly useful during travelling downhill - setting the braking level before the start of the downhill can ensure a reduced maximum speed. Equally, such a method is useful during a fitness or training regime. In this case, a user can deliberately set a resistance via one of the braking levels and can train against this resistance.

In some further arrangements, a release mechanism 148 may be provided, wherein the release mechanism 148, when actuated, resets the brake level to the zeroth level, i.e., no braking force is applied. A user may then sequentially cycle through the levels until an appropriate braking level is found.

In additional or alternative arrangements, the user actuator 12 is provided with a two or more directional actuator means 134. In other words, the actuator means 134 may be actuated in one direction or a second direction. Generally speaking, the actuator means 134 is actuated in a first general direction A, wherein actuation in the first general direction A causes the braking level to increase to the next level. The actuator means 134 is further actuated in a second general direction B, wherein actuation in the second general direction B causes the braking level to decrease to the next level.

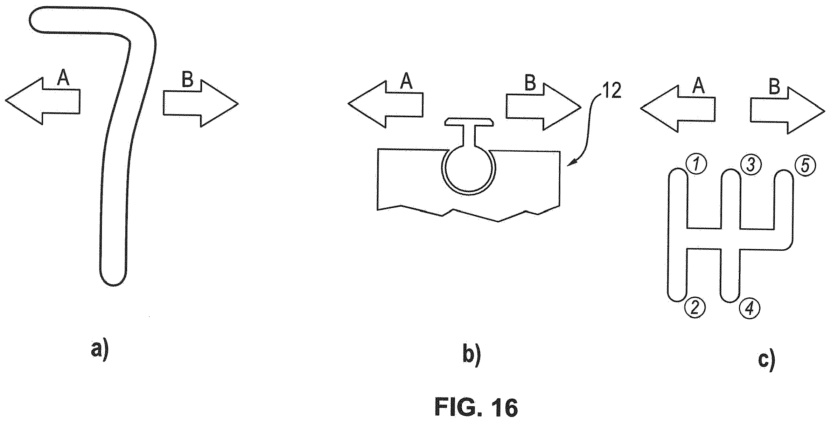

In Fig. 16, three examples of two or more directional actuation means 134 are shown. The first example, Fig. 16(a), shows the trigger as discussed previously. The trigger is actuated toward the ski pole, in this case, as the first direction and actuated away from the ski pole as the second direction. The second example, Fig. 16(b), shows a joystick arrangement, typically provided on a surface of the user actuator 12. The joystick arrangement may be actuated in a left-to-right motion or a front-to-back motion, wherein one direction is the general direction A and the opposite direction is the general direction B. In Fig. 16(c), a third example includes a shift pattern, that is shifted by a lever or stick arrangement, similar to those found on automobile transmissions. A first general direction A includes a transition from point 1, to point 2, to point 3, etc. and a second general direction B is the opposite. Here, the lever or stick arrangement is moved in various different directions to select the levels, but the general directions are indicated as in the Figure.

The directions are not limited and may be reversed for all three of the above examples, depending upon the specific desired configuration.

### Fifth example

The fifth example includes the restriction means 14 disposed in the one or more brake units 10. In this case, the restriction means 14 may be an adjustable disc or ring provided in the pump 128 and may be adapted to restrict the brake piston 102. Accordingly, the control unit 8 instructs the pump 128 to compress and actuate the brake piston 102. However, when the restriction means 14 is present, the restriction means 14 prevents the brake piston 102 from actuating the instructed distance. For instance, the restriction means 14 is provided such that, despite the instruction from the control unit 8, the braking force is limited to a value set by the restriction means 14. Alternatively, the restriction means 14 may be a flow control element situated between the pump 128 and the brake piston 102.

As with the other examples, the restriction means 14 may be set according to a user operated control or a measurement from a sensor; that is, the physical position or the flow rate is adjustable.

It should be clear that the above five examples detail specific arrangements of restricting the braking force to be applied to the one or more wheels of the wheeled article 2 or roller ski 100. Moreover, it should be appreciated that the five aforementioned examples are not mutually exclusive. For example, the fifth example can be combined with the first example, such that the restriction means 14 in the one or more brake units 10 acts as a fail-safe means should the restriction means 14 responsible for the mapping of the first example fail.

In addition, all of the five examples may be combined with additional features, as will be described herein below.

In any of the aforementioned examples, the maximum level of the braking force may be set according to any criteria. In one configuration, a teacher may explicitly set a maximum level for a student that is currently being taught. In this case, the teacher may set an override maximum level of braking. Accordingly, the restriction means 14 is adapted to not apply more braking force than is stated by the override level. For example, suppose the teacher sets the override level to 70 % of the maximum braking force. A student is then limited to only apply a maximum of 70 % of the braking force regardless of the method that the restriction means 14 operates according to. Taking the first example as an example, the mapping may only extend up to the override level, regardless of any other input from sensors or the like. The mapping is not limited to, in this case, 0-70 %, however. The mapping may be according to any range as long as the range is within the 0-70 % range defined by the override level.

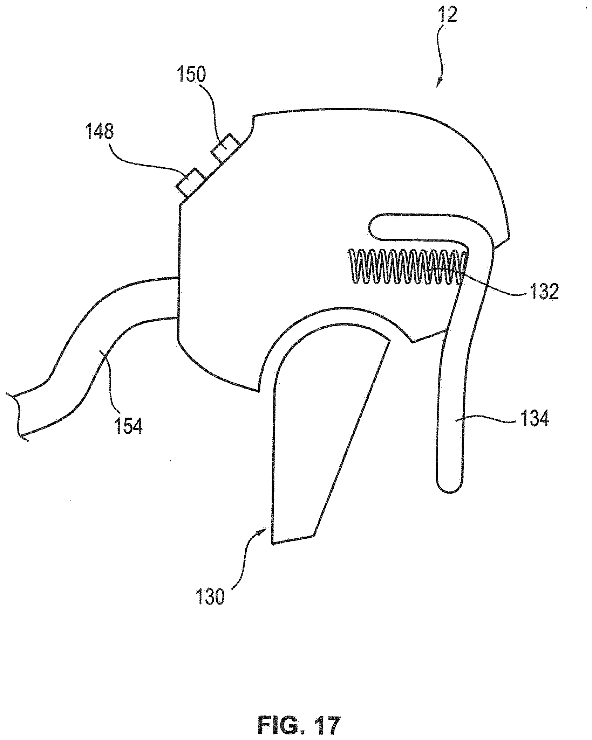

Any of the aforementioned examples of the actuation of the actuation means 134 may further be provided with a hold mechanism 150, as illustrated in Fig. 17. The hold mechanism 150 may be provided so as to hold a desired braking level. For example, the user may actuate the actuation means 134 to a desired braking force for downhill or fitness training purposes as discussed in relation to the fourth example. Therefore, maintaining the braking level via continuous pressing of the actuator means 134 is not only uncomfortable for the user but also distracts the user and could cause the user to lose balance more easily, for example. The hold mechanism 150 enables the user to find the desired braking level, and subsequently hold that braking level via activation of the hold mechanism 150. Thereafter, the user is free to release the actuation means 134.

In addition, or alternatively, the user actuator 12 may be provided with the release mechanism 148 described in the fourth example. The release mechanism 148, when used in conjunction with the hold mechanism 150, allows for cancellation of a braking force applied to the one or more wheels 6. That is, after activation of the hold mechanism 150, the user may desire to return to a non-resistance level and subsequently engages the release mechanism 148 to release any braking force currently being applied.

Furthermore, any of the aforementioned examples may additionally or alternatively be provided with feedback means 152. In the preferred arrangement, the user actuator 12 is a wireless device, and thus the actuator of the actuation means 134 may not provide the user with an indication of the braking force. Therefore, feedback means 152 adapted to provide a feedback force proportional to the braking force may be provided.

In Fig. 17, the feedback means 152 is depicted as a spring, but the feedback means 152 is not limited to this. Indeed, the feedback means 152 can include any component capable of providing a resistive force upon compression of the actuator, such as a hydraulic system, a magnetic system, or the like. The feedback means 152 may be provided so as to prevent the user from actuating the actuation means 134 from 0 to 100 % in a short space of time.

Alternatively, the feedback means 152 could include the display located on the user actuator 12 or wheeled article 2, and could display any number of values or symbols to indicate the braking force. For instance, this could include a current speed, a numeric or graphic representation of the braking force, or the like. As discussed in the fourth example, the feedback force for the non-linear actuation may be provided by the feedback means 152.

The aforementioned examples may additionally or alternatively also be provided with a fail-safe mechanism. A first fail-safe mechanism may include a relay system, whereby the user actuator 12 and the control unit 8 continually communicate with each other, or intermittently over a short period of time, 0.1 seconds for example. The first fail safe mechanism may be present so as to detect the loss of the user actuator 12, which may lead to a user being unable to control the speed of the wheeled article 2, resulting in potentially dangerous and unsafe speeds being reached. If the control unit 8 acts as the source, then the control unit 8 may send a relay signal to the user actuator 12. When the user actuator 12 receives the relay signal, the user actuator 12 sends a confirmation signal indicating that the relay signal from the control unit 8 is received. If, however, the user actuator 12 does not receive the relay signal from the control unit 8, or the control unit 8 does not receive the confirmation signal, then after a predetermined amount of time, the control unit 8 or user actuator 12 may actuate the one or more brake units 10. In this instance, the restriction means 14 may designate a certain braking force or the restriction means 14 may be overridden entirely.

A second fail-safe mechanism, which may be used in addition or alternatively to the first fail-safe mechanism, is that of providing a physical connection 154, as shown in Fig. 17, between the user and the user actuator 12 or between the user actuator 12 and the wheeled article 2. When the user actuator 12 is separated from the user or the wheeled article 2 by a distance greater than the physical connection 154, then the physical connection 154 is adapted to be released from one or more of the user, user actuator 12, or wheeled article 2. When the physical connection 154 is released, the control unit 8 is adapted to activate the brake unit 10 in a similar manner to that described with the first fail-safe mechanism.

As discussed briefly in connection with the examples above, the restriction means 14 may be adapted to calculate or regulate the speed of the wheeled article 2 based on a measurement from a sensor. The sensor may be any one or more, or any combination of one or more of, a weight or distance sensor, a speed sensor, a tilt angle sensor, and an incline sensor.

Regarding the weight sensor, the required braking force varies depending upon the load applied to the wheeled article 2. That is, a heavier load requires a larger braking force to regulate the speed at the same rate as a lighter load. Accordingly, when calculating the restriction of the braking force, such as the mapping in the first example, the restriction varies depending upon the weight applied to the wheeled article 2.

The sensor used to detect the weight may be a weight sensor or pressure sensor that is directly adapted to measure the weight applied to the sensor. Alternatively, the sensor may be a distance sensor that is adapted to detect the flexion of the body 4 of the wheeled article 2. Accordingly, a larger flexion indicates a heavier load, and thus the weight may be calculated indirectly from this. Preferably, these sensors are located on the wheeled article 2.

Regarding the speed sensor, the speed sensor measures the speed of the wheeled-article 2 during use. Accordingly, the required braking force may also be speed dependent; for example, a larger force is required when the wheeled article 2 is travelling faster. Accordingly, the output of the speed sensor may be used to determine the mapping of the first example, for example, in addition to the restriction means 14 used in any of the aforementioned examples.

This may be particularly advantageous when the restriction applied by the restriction means 14 is not appropriate, i.e., too weak. For example, suppose the maximum magnitude of the braking force is limited to 50 % of the total braking force, and the user applies the braking force but is unable to regulate the speed sufficiently. The speed sensor may communicate with the restriction means 14 and cause the restriction means 14 to recalculate the limit, for example, to 70 %. The user may then apply an extra 20 % of the braking force and achieve a desired speed.

Moreover, the speed sensor may be combined with a warning means. The warning means could be located on the user actuator 12 or the wheeled article 2 and may provide a warning to the user when a speed exceeds a predetermined threshold. Furthermore, the warning means could also be adapted to communicate with the control means 8 and cause the one or more brake units 10 to actuate if the speed is too great. The warning means may also be realised with the light element 135.

Regarding the tilt and incline sensors, these sensors are adapted to detect a tilt angle, i.e., left-right, of the wheeled article 2, or an incline angle, i.e., front-back, of the wheeled article 2. During cornering, for example, the wheeled article 2 is likely to be lent over at a large angle with respect to the vertical. Braking during corner is not advisable due to the fact that sliding is more likely. Therefore, the restriction means 14 may be adapted to increase the limit to 10 % of the maximum braking force during cornering. Equally, the incline sensor may detect if the wheeled article 2 is travelling uphill or downhill and adjust the restriction accordingly.

A further sensor may also be provided in addition or alternatively to any of the above. An anti-lock sensor may be provided that is adapted to detect if one or more of the one or more wheels 6 is locked or about to lock. Locking of the wheels 6 leads to a loss of control and is a highly undesired effect. The anti-lock sensor is adapted to detect when this condition is about to occur and communicate with the control unit 8 and/or restriction means 14 accordingly. The control unit 8 may reduce the braking force applied thereto, while the restriction means 14 may adjust the maximal limit of the braking force, thereby decreasing the limit, i.e., from 50 to 40 %. In both cases, the braking force is reduced and a chance of locking of the one or more wheels 6 is reduced. One or more of the one or more wheels 6 may be provided with an anti-lock sensor.

In addition, the anti-lock sensor may cause the control unit 8 to momentarily release the braking force and shortly thereafter reapply the same braking force. Such a technique is known as Kaydence braking, and is a well-known manual technique for avoiding a locking situation.

In another configuration, yet another sensor may be provided either in addition to the aforementioned sensors or in isolation therefrom. One or more terrain sensors may be provided that are adapted to detect the terrain surrounding the wheeled article 2. More specifically, the terrain sensors may be positioned at the front of the wheeled article 2 and detected the terrain directly in front of the wheeled article 2. The terrain sensors may use any means to measure the terrain, such as laser scanning or sonar, or may obtain and use GPS map data or the like. The terrain sensors may operate over any distance range, although it is preferable that the terrain sensor operates in one of a 0-10 m, 0-5 m, 0-2 m, or 0-50 cm range. The range may also be adjustable depending upon the current speed of the wheeled article 2. The terrain sensors are thus adapted to measure the terrain that the wheeled article 2 is currently traversing or is about to traverse.

Accordingly, terrain measurements may be sent to the control unit 8 and the control unit 8 may use an algorithm to determine the roughness or unevenness of the terrain. In this regard, the algorithm may determine a value, such as an average value, indicative of the terrain roughness on the basis of the data. For instance, the value may be an average value taken along a cross-section of a 2D map over a certain distance from the terrain sensor. The determined roughness or unevenness may be compared to a threshold and, if the threshold is surpassed (meaning that the terrain is considered to be too rough or uneven), then the control unit 8 may actuate the one or more brake units 10 to apply a braking force to the one or more wheels 6. Alternatively, the control unit 8 may communicate with the restriction means 14 and subsequently alter the effect of the restriction means 14. For example, if the terrain is considered to be too rough, i.e., the threshold is surpassed, then the restriction means 14 may be adapted to reduce the maximal braking force that may be applied. Alternatively, the restriction means 14 may be adapted to increase the maximal braking force depending upon the terrain. To this end, the terrain sensors are not limited to measuring the roughness or unevenness of the terrain, and may additionally or alternatively be adapted to measure the composition of the terrain. For example, the restriction means 14 may be adjusted differently if the wheeled article 2 is travelling over sand compared to travelling over tarmac.

Furthermore, the threshold may be set at a predefined and fixed value, or the threshold may be adjustable. Indeed, the threshold may be dependent upon the output of any one or all of the speed sensor, the weight sensor, the tilt sensor, and the incline sensor. For example, the determination as to whether or not the terrain is too rough and is thus unsafe may depend upon the speed that the wheeled article 2 is travelling. A wheeled article 2 travelling over rough terrain is less stable (easier to lose control) when the wheeled article 2 is travelling faster. Thus, the threshold may be set to a higher value (higher level of roughness) when the wheeled article 2 is moving slower. Equally, the weight of a user may determine the significance of the roughness of the terrain. In one example, the heavier a user is, the lower the threshold is set. This is due to the fact that a lighter user may experience more "bouncing" when passing over rough terrain, as opposed to a heavier user that exerts more downward force and thus follows the contours of the terrain more closely. The setting of the threshold, however, is not limited to the aforementioned examples, and may be set on the basis of any combination of parameters obtained by any of the aforementioned sensors.

The above description focuses on providing one wheeled article 2 with one user actuator 12. When this is applied to a roller ski 100 in particular, a user requires two of the roller skis 100. The present invention is not particularly limited to any configuration of two or more wheeled articles 2.

For example, a first scenario provides two or more wheeled articles 2, each provided with one or more brake units 10 as described above. A single user actuator 12 is provided and is adapted to communicate with the one or more brake units 10 provided on two separate wheeled articles 2. Accordingly, the same braking force is applied to both wheeled articles 2. The user actuator 12 may be used to apply the braking force to the front wheels 6a or the rear wheels 6b or both. As readily understood, the restriction means 14 may be located in the user actuator 12 or on each of the wheeled articles 2.

A second scenario provides two or more wheeled articles 2, each provided with one or more brake units 10 as described above. A single user actuator 12 is provided and is adapted to communicate with the one or more brake units 10 provided on two separate wheeled articles 2. However, a different braking force may be applied to both wheeled articles 2. This is particularly apparent when each of the wheeled articles 2 possesses a different restriction means 14. The user actuator 12 may be used to apply the different braking forces to the front wheels 6a or the rear wheels 6b or both. As readily understood, the restriction means 14 may be located in the user actuator 12 or on each of the wheeled articles 2.

A third scenario provides two or more wheeled articles 2, each provided with one or more brake units 10 as described above. Two or more user actuators 12 are provided and are adapted to communicate with the one or more brake units 10 provided on two separate wheeled articles 2. In this case, the same or a different braking force may be applied to both wheeled articles 2. The user actuator 12 may be used to apply the same or different braking forces to the front wheels 6a or the rear wheels 6b or both. As readily understood, the restriction means 14 may be located in the user actuator 12 or on each of the wheeled articles 2. In this case, the user actuators 12 may also be synchronised with each other so as to ensure that the same braking force is applied to the wheeled articles 2.

In addition, a plurality of the user actuators 12 may be provided, wherein each user actuator 12 is set to a specific braking force according to one of the examples. That is, for example, one actuator is set to the range 0 to 20 %, one actuator is set to 0 to 30 %, etc. A user may be provided with a complete set of the user actuators 12 and select the correct user actuator 12 to mount to the ski pole. To adjust the limit of the braking force, the user simply removes and replaces the user actuator 12 with a different user actuator 12.

As described by the above, the present invention provides several alternative means of regulating and/or limiting the speed of a wheeled article 2. This is primarily achieved via the use of a restriction means 14 that is adapted to control or regulate one or more brake units 10. By providing a reliable and easy to use speed control system, a user, particularly a beginner, is provided with more confidence to use the wheeled article 2 and is more easily able to safely regulate the speed of a wheeled article 2.

## Claims

1. A speed control system (1) for a wheeled article (2) powered by human interaction or via gravitational influences, which is adapted to regulate and/or limit the speed of the wheeled article (2), the wheeled article (2) comprising a body (4) and one or more wheels (6) mounted to the body (4), the speed control system (1) comprising;
one or more brake units (10) provided so as to engage one or more of the one or more wheels (6) and apply a braking force thereto;
a user actuator (12) disposed so as to be operable by a user;
a control unit (8) adapted to receive a signal indicative of the actuation of the user actuator (12) when operated by the user and actuate the one or more brake units (10) to engage the one or more wheels (6); and
restriction means (14) adapted to limit the magnitude of the braking force applied to the one or more wheels (6) from the one or more brake units (10),
wherein the restriction means (14) is adapted to limit the magnitude of the braking force to less than 100 percent of the maximum braking force attainable by the one or more braking units (10),
wherein the user actuator (12) includes actuation means (134) that is compressed by the user's hand and is adapted to move from a start or initial position that imparts no braking force to the one or more wheels (6), to a final position that imparts a maximal braking force,
wherein the restriction means (14) is adapted to convert the actuation of the actuation means (134) over its full range of motion to a partial range of actuation of the one or more brake units (10),
wherein the actuator means (134) is configured to send an electric signal to the restriction means (14),
**characterised in that**
the restriction means (14) is configured to convert the input electric signal from the actuator means (134) to a reduced, partial range of actuation of the one or more brake unit (10), and
wherein the full travel of the actuation means (134) is mapped to any one of 0 to 90 percent, 0 to 80 percent, 0 to 70 percent, 0 to 60 percent, 0 to 50 percent, 0 to 40 percent, 0 to 30 percent, 0 to 20 percent or 0 to 10 percent of the full range of the actuation of the one or more brake units (10).

2. The speed control system (1) of claim 1, wherein the restriction means (14) is adjustable via a user operated control or via a measurement from a sensor so as to provide a variable partial range of actuation of the brake unit (10).

3. The speed control system (1) of any of the preceding claims, wherein the restriction means (14) is adapted to provide a non-linear actuation of the user actuator (12), each step requiring a larger force to be applied from the user to actuate the user actuator (12) further, and each step providing a progressively increased magnitude of the braking force.

4. The speed control system (1) of any of the preceding claims, in particular claim 1, wherein the restriction means (14) is adapted to limit the braking force according to a series of levels of braking force, wherein the levels of braking force are an amount of force applied to the one or more wheels (6) by the one or more brake units (10), each level accessible via actuation of actuation means (134) provided in the user actuator (12).

5. The speed control system (1) of any of the preceding claims, in particular claim 4, wherein a first level of braking force is accessible upon a first actuation of the actuation means (134), and a second level of braking force is accessible upon a second actuation of the actuation means (134), the second level of braking force applying a larger magnitude of the braking force to the one or more wheels (6) than the first level of braking force.

6. The speed control system (1) of any of the preceding claims, in particular any of claims 4 or 5, wherein the actuation means (134) is actuated in a first direction to sequentially access levels of braking force wherein a next level of braking force accessed in the first direction provides a stronger braking force applied to the one or more wheels (6) than a previous level of braking force, and the actuation means (134) is actuated in a second direction to sequentially access levels of braking force wherein a next level of braking force accessed in the second direction provides a weaker braking force applied to the one or more wheels (6) than the previous level of braking force.

7. The speed control system (1) of any of the preceding claims, in particular any of claims 4 to 6, wherein the restriction means (134) is adjustable via a user operated control or via a measurement from a sensor so as to provide variable braking levels depending upon the output of the user operated control or the sensor.

8. The speed control system (1) of any of the preceding claims, further comprising a hold mechanism (150), wherein, when the user actuates the user actuator (12) to a certain braking force, the hold mechanism (150) is adapted to maintain the certain braking force regardless of the actuation of the user actuator.

9. The speed control system (1) of any of the preceding claims, in particular any of claims 4 to 8, further comprising a release mechanism (148), the release mechanism (148) adapted to release the one or more braking units (10) such that, upon actuation of the release mechanism (148), the braking force applied to the one or more wheels (6) is removed.

10. The speed control system (1) of any of the preceding claims, in particular claim 1, wherein the one or more brake units (10) are hydraulic disc brakes, and the one or more brake units (10) include one or more brake pistons (102) and a pump (128), the one or more brake pistons (102) actuated by the pump (128) adapted to compress hydraulic brake fluid, the restriction means (14) provided in the one or more brake units (10), the restriction means (14) adapted to be limit the actuation of the one or more brake pistons (102).

## Patentansprüche

1. Geschwindigkeitskontrollsystem (1) für einen mit Rädern versehenen Gegenstand (2), der durch menschliche Interaktion oder durch Gravitationseinflüsse angetrieben wird, das ausgelegt ist, die Geschwindigkeit des mit Rädern versehenen Gegenstands (2) zu regulieren und/oder zu begrenzen, wobei der mit Rädern versehene Gegenstand (2) einen Körper (4) und ein oder mehrere Räder (6) umfasst, die an dem Körper (4) angebracht sind, wobei das Geschwindigkeitskontrollsystem (1) umfasst:
eine oder mehrere Bremseinheiten (10), die so vorgesehen sind, dass sie mit einem oder mehreren der ein oder mehreren Räder (6) in Eingriff kommen und eine Bremskraft auf diese anwenden;
eine Benutzerbetätigungsvorrichtung (12), die so angeordnet ist, dass sie von einem Benutzer bedient werden kann;
eine Steuereinheit (8), ausgelegt, ein Signal zu empfangen, das die Betätigung der Benutzerbetätigungsvorrichtung (12) anzeigt, wenn diese von dem Benutzer bedient wird, und die eine oder mehrere Bremseinheiten (10) betätigt, um mit dem einen oder den mehreren Rädern (6) in Eingriff zu kommen; und
Begrenzungsmittel (14), ausgelegt, die Größe der von der einen oder den mehreren Bremseinheiten (10) auf das eine oder die mehreren Räder (6) angewendeten Bremskraft zu begrenzen,
wobei das Begrenzungsmittel (14) ausgelegt ist, die Größe der Bremskraft auf weniger als 100 Prozent der maximalen Bremskraft, die von der einen oder den mehreren Bremseinheiten (10) erreichbar ist, zu begrenzen,
wobei die Benutzerbetätigungsvorrichtung (12) ein Betätigungsmittel (134) aufweist, das durch die Hand des Benutzers zusammengedrückt wird und ausgelegt ist, sich von einer Start- oder Anfangsposition, die keine Bremskraft auf das eine oder die mehreren Räder (6) ausübt, in eine Endposition, die eine maximale Bremskraft ausübt, zu bewegen,
wobei das Begrenzungsmittel (14) ausgelegt ist, die Betätigung des Betätigungsmittels (134) über seinen vollen Bewegungsbereich in einen Teilbereich der Betätigung der einen oder mehreren Bremseinheiten (10) umzuwandeln,
wobei das Betätigungsmittel (134) konfiguriert ist, ein elektrisches Signal an das Begrenzungsmittel (14) zu senden,
**dadurch gekennzeichnet, dass** das Begrenzungsmittel (14) konfiguriert ist, das elektrische Eingangssignal von dem Betätigungsmittel (134) in einen reduzierten Teilbereich der Betätigung der einen oder mehreren Bremseinheiten (10) umzuwandeln, und
wobei der volle Weg des Betätigungsmittels (134) einem von 0 bis 90 Prozent, 0 bis 80 Prozent, 0 bis 70 Prozent, 0 bis 60 Prozent, 0 bis 50 Prozent, 0 bis 40 Prozent, 0 bis 30 Prozent, 0 bis 20 Prozent oder 0 bis 10 Prozent des vollen Bereichs der Betätigung der einen oder mehreren Bremseinheiten (10) zugeordnet wird.

2. Geschwindigkeitskontrollsystem (1) nach Anspruch 1, wobei das Begrenzungsmittel (14) über eine benutzerbediente Steuerung oder über eine Messung von einem Sensor einstellbar ist, um einen variablen Teilbereich der Betätigung der Bremseinheit (10) bereitzustellen.

3. Geschwindigkeitskontrollsystem (1) nach einem der vorhergehenden Ansprüche, wobei das Begrenzungsmittel (14) ausgelegt ist, eine nichtlineare Betätigung der Benutzerbetätigungsvorrichtung (12) bereitzustellen, wobei jede Stufe eine größere Kraft vom Benutzer erfordert werden muss, um die Benutzerbetätigungsvorrichtung (12) weiter zu betätigen, und jede Stufe eine progressiv erhöhte Größe der Bremskraft bereitstellt.

4. Geschwindigkeitskontrollsystem (1) nach einem der vorhergehenden Ansprüche, insbesondere Anspruch 1, wobei das Begrenzungsmittel (14) ausgelegt ist, die Bremskraft gemäß einer Reihe von Bremskraftniveaus zu begrenzen, wobei die Bremskraftniveaus ein Kraftbetrag sind, der auf das eine oder die mehreren Räder (6) durch die eine oder die mehreren Bremseinheiten (10) angewendet wird, wobei jedes Niveau über die Betätigung des in der Benutzerbetätigungsvorrichtung (12) vorgesehenen Betätigungsmittels (134) zugänglich ist.

5. Geschwindigkeitskontrollsystem (1) nach einem der vorhergehenden Ansprüche, insbesondere Anspruch 4, wobei ein erstes Bremskraftniveau bei einer ersten Betätigung des Betätigungsmittels (134) zugänglich ist und ein zweites Bremskraftniveau bei einer zweiten Betätigung des Betätigungsmittels (134) zugänglich ist, wobei das zweite Bremskraftniveau eine größere Bremskraft auf das eine oder die mehreren Räder (6) anwendet als das erste Bremskraftniveau.

6. Geschwindigkeitskontrollsystem (1) nach einem der vorhergehenden Ansprüche, insbesondere nach einem der Ansprüche 4 oder 5, wobei das Betätigungsmittel (134) in einer ersten Richtung betätigt wird, um sequentiell auf Bremskraftniveaus zuzugreifen, wobei ein nächstes Bremskraftniveau, auf das in der ersten Richtung zugegriffen wird, eine stärkere Bremskraft bereitstellt, die auf das eine oder die mehreren Räder (6) anwendet wird, als ein vorheriges Bremskraftniveau, und das Betätigungsmittel (134) in einer zweiten Richtung betätigt wird, um sequentiell auf Bremskraftniveaus zuzugreifen, wobei ein nächstes Bremskraftniveau, auf das in der zweiten Richtung zugegriffen wird, eine schwächere Bremskraft bereitstellt, die auf das eine oder die mehreren Räder (6) angewendet wird, als das vorherige Bremskraftniveau.

7. Geschwindigkeitskontrollsystem (1) nach einem der vorhergehenden Ansprüche, insbesondere nach einem der Ansprüche 4 bis 6, wobei das Begrenzungsmittel (134) über eine benutzerbediente Steuerung oder über eine Messung von einem Sensor einstellbar ist, um variable Bremsniveaus in Abhängigkeit von der Ausgabe der benutzerbedienten Steuerung oder des Sensors bereitzustellen.

8. Geschwindigkeitskontrollsystem (1) nach einem der vorangehenden Ansprüche, ferner umfassend einen Haltemechanismus (150), wobei der Haltemechanismus (150) ausgelegt ist, die bestimmte Bremskraft unabhängig von der Betätigung der Benutzerbetätigungsvorrichtung aufrechtzuerhalten, wenn der Benutzer das Benutzerbetätigungselement (12) mit einer bestimmten Bremskraft betätigt.

9. Geschwindigkeitskontrollsystem (1) nach einem der vorhergehenden Ansprüche, insbesondere nach einem der Ansprüche 4 bis 8, ferner umfassend einen Auslösemechanismus (148), wobei der Auslösemechanismus (148) ausgelegt ist, die eine oder die mehreren Bremseinheiten (10) zu lösen, so dass bei Betätigung des Auslösemechanismus (148) die auf das eine oder die mehreren Räder (6) ausgeübte Bremskraft aufgehoben wird.

10. Geschwindigkeitskontrollsystem (1) nach einem der vorhergehenden Ansprüche, insbesondere nach Anspruch 1, wobei die eine oder die mehreren Bremseinheiten (10) hydraulische Scheibenbremsen sind und die eine oder die mehreren Bremseinheiten (10) einen oder mehrere Bremskolben (102) und eine Pumpe (128) umfassen, wobei der eine oder die mehreren Bremskolben (102), die durch die Pumpe (128) betätigt werden, ausgelegt sind, hydraulisches Bremsfluid zu komprimieren, wobei das Begrenzungsmittel (14) in der einen oder den mehreren Bremseinheiten (10) vorgesehen ist, wobei das Begrenzungsmittel (14) ausgelegt ist, die Betätigung des einen oder der mehreren Bremskolben (102) zu begrenzen.

## Revendications

1. Système de commande de vitesse (1) pour un article à roues (2) actionné par une interaction humaine ou par des influences gravitationnelles, lequel est adapté pour réguler et/ou limiter la vitesse de l'article à roues (2), l'article à roues (2) comprenant un corps (4) et une ou plusieurs roues (6) montées sur le corps (4), le système de commande de vitesse (1) comprenant :
une ou plusieurs unités de frein (10) conçues de manière à engager l'une ou plusieurs parmi les une ou plusieurs roues (6) et pour appliquer une force de freinage à celles-ci ;
un actionneur d'utilisateur (12) disposé de manière à pouvoir être activé par un utilisateur ;
une unité de commande (8) adaptée pour recevoir un signal indiquant l'actionnement de l'actionneur d'utilisateur (12) lors de l'activation par l'utilisateur et pour actionner les une ou plusieurs unités de frein (10) afin d'engager les une ou plusieurs roues (6) ; et
un moyen de restriction (14) adapté pour limiter l'amplitude de la force de freinage appliquée aux une ou plusieurs roues (6) à partir des une ou plusieurs unités de frein (10),
dans lequel le moyen de restriction (14) est adapté pour limiter l'amplitude de la force de freinage à moins de 100 pour cent de la force de freinage maximale atteignable par les une ou plusieurs unités de frein (10),
dans lequel l'actionneur d'utilisateur (12) inclut un moyen d'actionnement (134) comprimé par la main de l'utilisateur et est adapté pour passer d'une position de départ ou initiale ne transmettant pas de force de freinage aux une ou plusieurs roues (6), à une position finale transmettant une force de freinage maximale,
dans lequel le moyen de restriction (14) est adapté pour convertir l'actionnement du moyen d'actionnement (134) sur toute sa plage de mouvement en une plage d'actionnement partielle des une ou plusieurs unités de frein (10),
dans lequel le moyen d'actionnement (134) est configuré pour envoyer un signal électrique au moyen de restriction (14),
**caractérisé en ce que**
le moyen de restriction (14) est configuré pour convertir le signal électrique entré à partir du moyen d'actionnement (134) en une plage d'actionnement partielle réduite des une ou plusieurs unités de frein (10), et
dans lequel la course complète du moyen d'actionnement (134) est mappée à l'une quelconque parmi 0 à 90 pour cent, 0 à 80 pour cent, 0 à 70 pour cent, 0 à 60 pour cent, 0 à 50 pour cent, 0 à 40 pour cent, 0 à 30 pour cent, 0 à 20 pour cent ou 0 à 10 pour cent de la plage complète de l'actionnement des une ou plusieurs unités de frein (10).

2. Système de commande de vitesse (1) selon la revendication 1, dans lequel le moyen de restriction (14) est réglable par une commande activée par l'utilisateur ou par une mesure provenant d'un capteur de manière à fournir une plage d'actionnement partielle variable de l'unité de frein (10).

3. Système de commande de vitesse (1) selon l'une quelconque des revendications précédentes, dans lequel le moyen de restriction (14) est adapté pour fournir un actionnement non linéaire de l'actionneur d'utilisateur (12), chaque étape nécessitant une force supérieure à appliquer par l'utilisateur pour actionner davantage l'actionneur d'utilisateur (12), et chaque étape fournissant une amplitude de force de freinage progressivement croissante.

4. Système de commande de vitesse (1) selon l'une quelconque des revendications précédentes, en particulier la revendication 1, dans lequel le moyen de restriction (14) est adapté pour limiter la force de freinage en fonction d'une série de niveaux de force de freinage, dans lequel les niveaux de force de freinage sont une quantité de force appliquée aux une ou plusieurs roues (6) par les une ou plusieurs unités de frein (10), chaque niveau étant accessible par l'actionnement du moyen d'actionnement (134) prévu dans l'actionneur d'utilisateur (12).

5. Système de commande de vitesse (1) selon l'une quelconque des revendications précédentes, en particulier la revendication 4, dans lequel un premier niveau de force de freinage est accessible lors d'un premier actionnement du moyen d'actionnement (134), et un deuxième niveau de force de freinage est accessible lors d'un deuxième actionnement du moyen d'actionnement (134), le deuxième niveau de force de freinage appliquant une amplitude de force de freinage supérieure aux une ou plusieurs roues (6) par rapport au premier niveau de force de freinage.

6. Système de commande de vitesse (1) selon l'une quelconque des revendications précédentes, en particulier selon l'une quelconque des revendications 4 à 5, dans lequel le moyen d'actionnement (134) est actionné dans une première direction pour accéder séquentiellement à des niveaux de force de freinage, dans lequel un niveau de force de freinage suivant accessible dans la première direction fournit une force de freinage supérieure appliquée aux une ou plusieurs roues (6) par rapport à un niveau de force de freinage précédent, et le moyen d'actionnement (134) est actionné dans une deuxième direction pour accéder séquentiellement à des niveaux de force de freinage, dans lequel un niveau de force de freinage suivant accessible dans la deuxième direction fournit une force de freinage inférieure appliquée aux une ou plusieurs roues (6) par rapport au niveau de force de freinage précédent.

7. Système de commande de vitesse (1) selon l'une quelconque des revendications précédentes, en particulier selon l'une quelconque des revendications 4 à 6, dans lequel le moyen de restriction (134) est réglable par une commande activée par l'utilisateur ou par une mesure provenant d'un capteur de manière à fournir des niveaux de freinage variables en fonction de la sortie de la commande activée par l'utilisateur ou du capteur.

8. Système de commande de vitesse (1) selon l'une quelconque des revendications précédentes, comprenant en outre un mécanisme de maintien (150), dans lequel, lorsque l'utilisateur actionne l'actionneur d'utilisateur (12) à une certaine force de freinage, le mécanisme de maintien (150) est adapté pour maintenir la certaine force de freinage quel que soit l'actionnement de l'actionneur d'utilisateur.

9. Système de commande de vitesse (1) selon l'une quelconque des revendications précédentes, en particulier selon l'une quelconque des revendications 4 à 8, comprenant en outre un mécanisme de libération (148), le mécanisme de libération (148) étant adapté pour libérer les une ou plusieurs unités de frein (10) de telle façon que lors d'un actionnement du mécanisme de libération (148), la force de freinage appliquée aux une ou plusieurs roues (6) est supprimée.

10. Système de commande de vitesse (1) selon l'une quelconque des revendications précédentes, en particulier selon la revendication 1, dans lequel les une ou plusieurs unités de frein (10) sont des freins à disque hydrauliques, et les une ou plusieurs unités de frein (10) incluent un ou plusieurs pistons de frein (102) et une pompe (128), les un ou plusieurs pistons de frein (102) étant actionnés par la pompe (128) adaptée pour comprimer un fluide de freinage hydraulique, le moyen de restriction (14) étant disposé dans les une ou plusieurs unités de frein (10), le moyen de restriction (14) étant adapté pour limiter l'actionnement des un ou plusieurs pistons de frein (102).
